# EUROPÄISCHE PATENTSCHRIFT

(11) **EP 4 077 895 B1**
(45) Veröffentlichungstag und Bekanntmachung des Hinweises auf die Patenterteilung: **04.09.2024**
(21) Anmeldenummer: 20853558.3
(22) Anmeldetag: 15.12.2020
(51) Int. Cl.: F01P 5/12, F01P 7/16

(54) **VORRICHTUNG ZUR HANDHABUNG VON FLUID INNERHALB EINES ZUMINDEST TEILWEISE ELEKTRISCH ANGETRIEBENEN FAHRZEUGS**
DEVICE FOR HANDLING FLUID WITHIN AN AT LEAST PARTIALLY ELECTRICALLY DRIVEN VEHICLE
DISPOSITIF DE GESTION DE FLUIDE À L'INTÉRIEUR D'UN VÉHICULE AU MOINS PARTIELLEMENT ÉLECTRIQUE

(30) Priorität: 16.12.2019 DE 102019134435
(43) Veröffentlichungstag der Anmeldung: 26.10.2022
(73) Patentinhaber: ECO Holding 1 GmbH, 97828 Marktheidenfeld (DE)
(72) Erfinder: DEHRMANN, Sven, 76744 Wörth (DE); ESLAVA ORRADRE, Adrian, 70374 Stuttgart (DE)
(74) Vertreter: Keller Schneider Patentanwaltsgesellschaft mbH
(86) Internationale Anmeldenummer: PCT/EP2020/086149
(87) Internationale Veröffentlichungsnummer: WO 2021/122547

(56) Entgegenhaltungen:
- WO-A2-2017/223232
- DE-A1- 102015 016 393
- GB-A- 2 444 948
- US-A- 4 385 594

## Beschreibung

Die Erfindung betrifft eine Vorrichtung zur Handhabung von Fluid innerhalb eines zumindest teilweise elektrisch angetriebenen Fahrzeugs.

Derartige Vorrichtungen sind im Stand der Technik auch als Energieoptimierungsmodul oder als Thermomanagement-Vorrichtung bekannt. Im Wesentlichen erfüllt die Thermomanagement-Vorrichtung die Aufgabe der energetischen Optimierung des Wärmehaushalts im Kraftfahrzeug mit dem Ziel der Verbrauchs- und Emissionsreduzierung, der Gewährleistung der Motorkühlung in jedem Betriebspunkt sowie der Optimierung des Innenrauml<omforts. Ziel ist es, die Wärmeströme wie Wärmezu- und Wärmeabfuhr im Verbrennungsmotor, Getrieben oder Fahrgastraum optimal zu leiten, um den Energieverbrauch zu reduzieren und den Innenrauml<omfort zu erhöhen. Wärme wird dabei mittels eines Wärmeträgers, wie Kühlmittel oder Luft, meist durch erzwungene Konvektion von einem Körper zu einem anderen Körper transportiert. Über Wärmeüberträger, wie beispielsweise Kühler, Ladeluftkühler, AGR-I<ühler oder Klima-Kondensatoren, wird Wärme von einem Fluid an ein anderes Fluid übertragen. Die Stoffströme der Fluide werden insbesondere durch Pumpen aufrechterhalten. Einen ausreichenden Kühlluftmassenstrom gewährleistet oftmals der Fahrtwind, so dass viele Fahrzeuge mit elektrisch angetriebenen I<ühlerlüftern ausgerüstet werden, sofern der Fahrfahrtwind nicht ausreicht.

Derartige Thermomanagement-Module sind im Stand der Technik hinlänglich bekannt. Beispielsweise ist aus der WO 2017/223232 A2 eine integrierte I<ühlmittelflaschenanordnung bekannt. Die I<ühlmittelflaschenanordnung beinhaltet einen Behälter, der für den Einsatz in einem Thermosystem konfiguriert ist. Beispiele für solche thermischen Systeme sind ein I<ühl-/Heizsystem eines batteriebetriebenen Elektrofahrzeugs, elektrische Stromerzeuger (z.B. motorbasierte Systeme), andere physikalische Anlageninstallationen, usw. Ein solches Reservoir beinhaltet einen ersten Abschnitt und einen zweiten Abschnitt. Der zweite Abschnitt ist mit dem ersten Abschnitt an einer Speicherschnittstelle verbunden und bildet so den Speicher, der für die Speicherung und/oder Strömung eines flüssigen Mediums konfiguriert ist. Der erste Abschnitt kann einen integrierten Kanal beinhalten, der einen Weg für den Durchfluss des flüssigen Mediums bietet. Der Speicher kann auch eine I<omponentenschnittstelle beinhalten, die dazu konfiguriert ist, den Anschluss einer Komponente daran zu erleichtern. Derartige Komponenten sind beispielsweise eine Pumpe, eine Batteriepumpe, eine Antriebsstrangpumpe, eine Kältemaschine, eine Heizung, einen Filter, ein Belüfter, ein Ventil, einen Stecker, ein Lüfter oder ein Kühler.

Ferner ist aus der DE 10 2018 102 542 A1 eine Vorrichtung zur Handhabung zumindest eines Fluids innerhalb eines Fahrzeugs, insbesondere eines zumindest teilweise elektrisch angetriebenen Fahrzeugs, bekannt. Die Vorrichtung umfasst zumindest ein im wesentlichen plattenförmig ausgebildetes erstes Verteilelement und zumindest ein zweites, im Wesentlichen parallel zu dem ersten Verteilelement angeordnetes Verteilelement, wobei das erste Verteilelement und/oder das zweite Verteilelement zumindest bereichsweise zumindest ein Fluidhandhabungselement umfasst bzw. umfassen und wobei das erste Verteilelement und das zweite Verteilelement zumindest bereichsweise Kunststoff umfassen sowie ein Verfahren zur Herstellung einer Vorrichtung zur Handhabung zumindest eines Fluids, insbesondere zumindest einer erfindungsgemäßen Vorrichtung.

Bei den bekannten Thermomanagement-Modulen besteht ein Problem dahingehend, dass die einzelnen Komponenten teilweise dezentral in einem Kraftfahrzeug angeordnet sind und über Verbindungsschläuche, Kabel und Steuergeräte miteinander verbunden sind. Dies hat die Konsequenz, dass die Verbindungsschläuche, Kabel und Steuergeräte mitunter über große Wegstrecken verteilt sind und der Montageaufwand groß ist. Zudem besteht ein hohes Risiko hinsichtlich Leckagen und Kurzschlüssen, wodurch die Zuverlässigkeit und Reparaturanfälligl<eit des gesamten Thermomanagement-Moduls leidet. Zusätzlich besteht das Problem, dass es beispielsweise durch auftretende Leckagen häufig zu Druck- und Spannungsverlusten kommt. Zusätzlich wird dieses Problem auch durch große Kabellängen oder Korrosion verstärkt.

Des Weiteren besteht ein besonderes Bedürfnis dahingehend, die Komponenten möglichst kompakt und platzsparend an die räumlichen Gegebenheiten in einem Kraftfahrzeug anzupassen.

Der Erfindung liegt daher die Aufgabe zugrunde, eine Vorrichtung zur Handhabung von Fluid eines zumindest teilweise elektrisch angetriebenen Fahrzeugs, insbesondere ein Thermomanagement-Modul, anzugeben, das die Probleme aus dem Stand der Technik überwindet.

Erfindungsgemäß wird diese Aufgabe durch eine Vorrichtung gemäß Patentanspruch 1 gelöst.

Die erfindungsgemäße Lösung besteht darin, eine Vorrichtung zur Handhabung von Fluid eines zumindest teilweise elektrisch angetriebenen Fahrzeugs mit einer Pumpeneinrichtung zu schaffen, wobei die Pumpeneinrichtung ein erstes Laufrad und ein zweites Laufrad umfasst, die koaxial zueinander angeordnet und durch Rotation als Pumpe zum Fördern von Fluid ausgebildet sind.

Dadurch wird beispielsweise der technische Vorteil erreicht, dass in einem kompakten Gehäuse zwei Pumpen gleichzeitig integriert und über unabhängige Antriebe angesteuert sind. Somit können zwei getrennte Fluidkreisläufe unabhängig voneinander betrieben werden, wodurch unterschiedlichen Betriebspunkte realisierbar sind.

Ein Fluid im Sinne dieser Erfindung kann jede Form von Kühlwasser oder Kühlmittel verstanden werden. Beispielsweise ist dem wasserbasierten Fluid Glycol oder ein Glycolgemisch beigefügt, um die Gefrierpunkt des Fluids herabzusetzen. Alternativ kann das Fluid auch auf einer Ölbasis hergestellt sein, um die elektrische Leitfähigkeit des Fluids auszuschließen. Dies bringt den zusätzlichen Vorteil mit sich, dass elektrische Zellen direkt gekühlt werden können.

Ein Laufrad im Sinne der Erfindung versteht sich als zentrales Bauteil einer Pumpe, welche mechanische Energie als Impuls an das Fluid übergibt. Hierbei bestimmt die Laufradform wie die Strömung aus der Pumpe austritt. Grundsätzlich wird zwischen radialen, halbradialen und axialen Laufrädern unterschieden.

Gemäß einer vorteilhaften Ausführungsform sind das erste Laufrad und das zweite Laufrad jeweils innerhalb eines Laufradgehäuses angeordnet, wobei das erste Laufradgehäuse und das zweite Laufradgehäuse mittels eines Trennelements voneinander getrennt ausgebildet sind. Dadurch wird beispielsweise der technische Vorteil erreicht, dass die Geometrie jedes Laufradgehäuses an den jeweiligen Verwendungszweck oder den zur Verfügung stehenden Einsatzort angepasst werden kann. Beispielsweise können die Ein- oder die Ausströmöffnungen des ersten Laufradgehäuses und des zweiten Laufradgehäuses unterschiedlich gestaltet werden. Beispielsweise ist das Trennelement entfernbar ausgebildet, wodurch das erste Laufrad und das zweite Laufrad innerhalb des gleichen Fluidkreislaufs betrieben werden können.

Nach einer besonderen Ausführungsform weist das Trennelement ein Lager auf. Das Lager kann in Doppelfunktion zur Lagerung sowie zur Abdichtung vorgesehen sein.

Um den flexiblen Einsatz zu erhöhen und um beispielsweise unterschiedliche Volumenströme oder Fluiddrücke in den voneinander getrennten Fluidkreisläufen zu erreichen, ist das erste Laufrad und das zweite Laufrad voneinander unabhängig betreibbar ausgebildet. Beispielsweise kann dieser Effekt zusätzlich durch unterschiedliche Laufradgeometrie oder unterschiedliche Gestaltung des ersten Laufradgehäuses und des zweiten Laufradgehäuses unterstützt werden.

Nach einer besonders bevorzugten Ausführungsform sind das erste Laufrad und das zweite Laufrad zueinander gegenläufig angeordnet. Eine gegenläufige Anordnung in diesem Sinne bedeutet, dass beispielsweise die Drehrichtung des ersten Laufrades und des zweiten Laufrades in entgegengesetzter Richtung orientiert ist. Dadurch wird beispielsweise der technische Vorteil erreicht, dass sich axiale Kräfte, die durch den Betrieb der Laufräder entstehen, gegenseitig ausgleichen können. Ein weiterer Vorteil ergibt sich aus der Anordnung der Einströmöffnungen. Besonders vorteilhaft ist, das Fluid axial in das Laufradgehäuse einzuströmen und es dann durch die Rotation der Laufräder in radialer Richtung auszuströmen. Durch die gegenläufige Anordnung der Laufräder kann Fluid in das erste Laufradgehäuse und in das zweite Laufradgehäuse in axialer Richtung, also von oben und von unten, eingeströmt werden. Dadurch kann die gesamte Pumpeneinrichtung besonders effizient betrieben werden.

Neben Ausführungsform ist das erste Laufrad von dem zweiten Laufrac verschieden ausgebildet. Verschieden in diesem Sinne bedeutet, dass beispielsweise die Geometrie unterschiedlich ausgebildet werden kann. So können die Laufräder in Abhängigkeit des Einsatzzwecl<s unterschiedliche Flügellängen, unterschiedliche Flügelhöhen, unterschiedliche Neigungen oder auch unterschiedliche Anzahl von Flügeln umfassen.

Dies dient beispielsweise dem Zweck, dass ein Fluidkreislauf eher drucl<optimiert, insbesondere im Einsatz der Batterieklimatisierung, oder alternativ volumenstromoptimiert, insbesondere bei Batteriegleichgewicht und energieeffizientem Pumpen, eingesetzt werden kann.

Nach Ausführungsform umfasst die Vorrichtung ein Vorrichtungsgehäuse mit einem ersten Gehäuseabschnitt und einem zweiten Gehäuseabschnitt, wobei der erste Gehäuseabschnitt und der zweite Gehäuseabschnitt durch eine fluidisch undurchlässige I<onturwand aneinander angrenzend ausgebildet sind. Die I<onturwand weist eine zum ersten Gehäuseabschnitt orientierte Seite und eine zum zweiten Gehäuseabschnitt orientierte Seite auf, zumindest ein Fluidhandhabungselement, wobei das Fluidhandhabungselement ein Mittel zum Erzeugen eines steuerbar veränderlichen Magnetfelds, welches in dem ersten Gehäuseabschnitt angeordnet ist, und ein Mittel in Form der Pumpeneinrichtung, welches durch das erzeugte Magnetfeld bewegbar ist und in dem zweiten Gehäuseabschnitt angeordnet ist, umfasst.

Dadurch ergibt sich beispielsweise der technische Vorteil, dass zwischen dem Mittel zum Erzeugen eines steuerbar veränderlichen Magnetfeldes und dem durch das erzeugte Magnetfeld bewegbare Mittel in Form der Ventileinrichtung lediglich eine magnetische Kopplung besteht. Diese magnetische Kopplung wirkt durch die fluidisch undurchlässige I<onturwand hindurch und ermöglicht, dass das durch das erzeugte Magnetfeld bewegbare Mittel nasslaufend in dem zweiten Gehäuseabschnitt im Fluid anzuordnen.

Das Mittel zum Erzeugen eines steuerbar veränderlichen Magnetfeldes hingegen, ist zusammen mit der Steuereinheit im "hydraulisch entkoppelten", trockenen ersten Gehäuseabschnitt angeordnet. Die Trennung zwischen wasserführendem zweiten Gehäuseabschnitt und der Elektronik im ersten Gehäuseabschnitt reduziert das Risiko von Leckagen und Kurzschlüssen. Zudem ist es nicht notwendig dynamische Dichtungen einzusetzen. Somit entsteht keine Verlustwärme durch Reibung und die Energieeffizienz nimmt zu. Insgesamt lässt sich dadurch ein höherer Wirkungsgrad erreichen. Somit kann die Pumpeneinrichtung vollständig im zweiten Gehäuseabschnitt angeordnet werden.

Gemäß Ausführungsform weist das Mittel zum Erzeugen eines steuerbar veränderlichen Magnetfelds, welches in dem ersten Gehäuseabschnitt angeordnet ist, einen ersten Stator und einen zweiten Stator auf. Dadurch kann beispielsweise der technische Vorteil erreicht werden, dass das Mittel zum Erzeugen eines steuerbar veränderlichen Magnetfelds in zwei Teilbereiche aufgeteilt werden kann. Somit können beispielsweise unterschiedliche Magnetfelder erzeugt werden, die eine differenzierte Ansteuerung von zwei verschiedenen durch das erzeugte Magnetfeld bewegbarer Mittel zulässt.

Darauf aufbauend umfasst das Mittel, welches durch das erzeugte Magnetfeld bewegbar ist und in dem zweiten Gehäuseabschnitt angeordnet ist, einen ersten Rotor, welcher dem ersten Stator zugeordnet ist, und einen zweiten Rotor, welcher dem zweiten Stator zugeordnet ist. Durch die Rotor-Stator-Anordnung kann mittels der magnetischen Kopplung durch die fluidisch undurchlässige I<onturwand hindurch ein Drehmoment erzeugt werden. Die Zuordnung des ersten Stators zu dem ersten Rotor und des zweiten Stators zu dem zweiten Rotor ist eine gezielte voneinander unabhängige Steuerung beider Rotoren möglich. Im Zusammenhang mit dem ersten Laufrad und dem zweiten Laufrad kann somit in einem kompakten Gehäuse beide Pumpen getrennt voneinander angesteuert und betrieben werden. Somit werden zwei getrennte Fluidkreisläufe unabhängig voneinander betreibbar, wodurch beispielsweise unterschiedlichen Betriebspunkte realisierbar sind.

Darauf aufbauend, ist dem ersten Rotor das erste Laufrad und dem zweiten Rotor das zweite Laufrad zugeordnet. Auch diese Zuordnung ermöglicht die unmittelbare Realisierung der bereits ausgeführten technischen Vorteile.

Nach einer zusätzlichen Ausführungsform weist die I<onturwand eine zylinderförmige Ausbuchtung auf, welche einen Innenraum des im ersten Gehäuseabschnitt angeordneten ersten Stators und zweiten Stators zumindest im Wesentlichen füllt. Dadurch wird beispielsweise der technische Vorteil erreicht, dass die I<onturwand durch ihre Ausbuchtung die genaue Einbauposition des ersten Stators und des zweiten Stators vorgibt. Somit bekommt die I<onturwand eine Doppelfunktion. Einerseits die erfindungswesentliche fluidische Undurchlässigkeit und andererseits die Positionierung des ersten Stators und zweiten Stators im ersten Gehäuseabschnitt.

Um eine direkte Drehmomentübertragung zwischen dem ersten Rotor und dem ersten Laufrad zu realisieren, ist der erste Rotor über eine Rotorwelle mit dem ersten Laufrad verbunden. Beispielsweise ist die Rotorwelle hohl ausgebildet, um das Hindurchführen einer weiteren Welle zu ermöglichen. Alternativ kann die Rotorwelle auch als Vollwelle ausgebildet sein.

Um die direkte Drehmomentübertragung zwischen dem zweiten Rotor und dem zweiten Laufrad zu realisieren, ist der zweite Rotor über eine Rotorhohlwelle mit dem zweiten Laufrad verbunden.

Nach einer besonders bevorzugten Ausführungsform sind das erste Laufrad und das zweite Laufrad jeweils radial außerhalb des ersten Rotors und des zweiten Rotors angeordnet. Dadurch wird beispielsweise der technische Vorteil erreicht, dass deutlich weniger axialer Bauraum notwendig ist. Mit anderen Worten kann die Vorrichtung kompakter ausgebildet werden. Durch diese Ausführungsform als sogenannter Außenläufer wird zusätzlich der technische Vorteil erreicht, dass der Durchmesser erheblich vergrößert wird, wodurch die Laufruhe und die Toleranz hinsichtlich möglicher Druckwellen gesteigert werden kann. Zusätzlich kann der innenliegende Stator kleiner ausgebildet werden, was die Herstellungskosten reduziert. Ein weiterer Vorteil liegt darin begründet, dass keine Wellen oder Hohlwellen zur Lagerung notwendig sind.

Nach einer weiteren vorteilhaften Ausführungsform ist der zweite Gehäuseabschnitt fluidführend ausgebildet und umfasst zumindest einen Anschluss zum Ein- und/ oder Ausströmen von Fluid. Dadurch wird beispielsweise der technische Vorteil erreicht, dass der zweite Gehäuseabschnitt ohne elektrische Schnittstellen konzipiert werden kann. Lediglich das Zuführen, das Umleiten und das Ableiten von Fluid steht im Vordergrund, wobei das Herstellen des zweiten Gehäuseabschnitts durch preiswerte Materialauswahl und die geeignete Fügeverfahren gekennzeichnet ist. Beispielsweise kann der zweite Gehäuseabschnitt mittels Vibrationsschweissen oder Spiegelschweissen hergestellt werden, was im Zusammenhang mit der elektronischen Steuereinheit aus thermischen Gründen problematisch wäre und somit nur getrennt umgesetzt werden kann. Es können auch mehrere Anschlüsse zum Ein- und/ oder Ausströmen von Fluid realisiert werden. Die Anschlüsse stellen hierbei die Kundenschnittstelle dar. Es können Schlauchdurchmesser, Anzahl und die entsprechenden Positionen der Anschlüsse variiert werden. Je nach Kundenanforderungen kann auch die Richtung der Anschlüsse angepasst werden, wobei auch eine variable Verstellbarl<eit der Anschlüsse denkbar wäre.

In einer besonderen Ausführungsform ist dem ersten Gehäuseabschnitt eine elektrische Steuereinheit zum Steuern der Vorrichtung zugeordnet. Die elektrische Steuereinheit ist zur Funktion der Vorrichtung notwendig und kann sowohl außerhalb des ersten Gehäuseabschnitts als auch innerhalb des ersten Gehäuseabschnitts angeordnet werden. Es ist ebenfalls denkbar, die Vorrichtung mit einer kundenseitigen externen Steuereinheit zu betreiben, wobei hierfür eine Schnittstelle an dem ersten Gehäuseabschnitt bereitgestellt werden kann. Alternativ oder zusätzlich lässt sich die Steuereinheit jedoch innerhalb des ersten Gehäuseabschnitts anordnen.

Gemäß einer zusätzlichen Ausführungsform umfasst die Vorrichtung ein zweites Fluidhandhabungselement, wobei die fluidisch undurchlässige I<onturwand kontinuierlich zwischen dem ersten Fluidhandhabungselement und dem zweiten Fluidhandhabungselement ausgebildet ist. Dadurch ergibt sich beispielsweise der technische Vorteil, dass sich die fluidisch undurchlässige I<onturwand nicht nur auf ein Fluidhandhabungselement beschränkt, sondern über zumindest zwei Fluidhandhabungselemente erstreckt. Beispielsweise kann sich die I<onturwand auch über drei oder mehrere Fluidhandhabungselemente hinweg erstrecken, wodurch sich die magnetische Kopplung kontinuierlich zwischen zumindest zwei Mitteln zum Erzeugen eines steuerbar veränderlichen Magnetfeldes und den zumindest zwei zugeordneten durch das erzeugte Magnetfeld bewegbaren Mitteln erstreckt. Die magnetische Kopplung wirkt damit durch die fluidisch undurchlässige I<onturwand hindurch und erstreckt sich über mindestens zwei Fluidhandhabungselemente hinweg. Beispielsweise kann sie sich auch über alle vorhandenen Fluidhandhabungselemente erstrecken. Zusätzlich ist es möglich, dass die fluidisch undurchlässige I<onturwand an einzelnen Stellen unterbrochen ist. Beispielsweise ist dies zielführend, wenn einzelne Fluidhandhabungselemente der Vorrichtung einen Antrieb aufweisen, welcher keine fluidisch undurchlässige I<onturwand benötigt. Besonderer Vorteil bleibt auch in diesem Fall, dass die zumindest zwei durch das erzeugte Magnetfeld bewegbaren Mittel nasslaufend in dem zweiten Gehäuseabschnitt im Fluid angeordnet werden können. Die Mittel zum Erzeugen eines steuerbar veränderlichen Magnetfeldes hingegen, sind zusammen mit der Steuereinheit im "hydraulisch entkoppelten", trockenen ersten Gehäuseabschnitt angeordnet. Die Trennung zwischen wasserführendem zweiten Gehäuseabschnitt und der Elektronik im ersten Gehäuseabschnitt reduziert das Risiko von Leckagen und Kurzschlüssen. Zudem ist es nicht notwendig dynamische Dichtungen einzusetzen. Somit entsteht keine Verlustwärme durch Reibung und die Energieeffizienz nimmt zu. Insgesamt lässt sich dadurch ein höherer Wirkungsgrad erreichen.

Um für die elektrische Steuereinheit eine optimale Kühlleistung zu realisieren, ist die elektrische Steuereinheit innerhalb des ersten Gehäuseabschnitts angrenzend an der fluidisch undurchlässigen I<onturwand zwischen dem ersten Fluidhandhabungselement und dem zweiten Fluidhandhabungselement angeordnet. Die Kühlleistung an der elektrischen Steuereinheit ist umso höher, je mehr Wärme von der elektrischen Steuereinheit abtransportiert werden kann. Somit besteht ein Bedürfnis einen möglichst großen Teil der elektrischen Steuereinheit so nah wie möglich an einen Fluidstrom anzunähern. Wenn die fluidisch undurchlässige I<onturwand auch zwischen einem ersten Fluidhandhabungselement und einem zweiten Fluidhandhabungselement angeordnet ist, so besteht in diesem Zwischenraum zwischen dem ersten Fluidhandhabungselement und dem zweiten Fluidhandhabungselement ein Abschnitt, welcher dazu geeignet ist die elektrische Steuereinheit flächig unmittelbar an der I<oturwand anzuordnen. In Verbindung mit einem unmittelbar angrenzenden Fluidströmungsl<anal auf der abgewandten Seite der I<onturwand, also im nasslaufenden zweiten Gehäuseabschnitt, ergibt sich eine optimale Kühlleistung.

Nach einer besonders bevorzugten Ausführungsform weist die Vorrichtung einen ersten Fluidkreislauf, welcher dem ersten Fluidhandhabungselement zugeordnet ist, und einen zweiten Fluidkreislauf, welcher dem zweiten Fluidhandhabungselement zugeordnet ist, auf. Dies macht die Vorrichtung besonders einfach betreibbar. In Kombination mit der Pumpeneinrichtung kann man beispielsweise mit nur einem Fluidhandhabungselement zwei Fluidkreisläufe betreiben. In Kombination mit serieller oder paralleler Anordnung lassen zusätzlich Funktionalitäten erreichen.

Gemäß einer besonderen Ausführungsform, sind die Rotorachsen der Fluidhandhabungselemente parallel zueinander angeordnet. Dadurch wird der besondere Vorteil erreicht, dass die Fertigung und die Montage in dieser Anordnung besonders einfach sind. Zusätzlich können einzelne Baugruppen einfach getestet und ausgetauscht werden.

Um die Flexibilität und die Integration der Vorrichtung in ein Fahrzeug zu verbessern, sind die Anschlüsse zum Ein- und/ oder Ausströmen von Fluid in einer Ebene angeordnet, welche in etwa orthogonal zur Orientierung der Rotorachsen der Fluidhandhabungselemente angeordnet ist.

Nach einem weiteren Aspekt besteht die erfindungsgemäße Lösung darin, eine Vorrichtung zur Handhabung von Fluid innerhalb eines zumindest teilweise elektrisch angetriebenen Fahrzeugs anzugeben, wobei die Vorrichtung ein Vorrichtungsgehäuse, einen ersten Gehäuseabschnitt und einen zweiten Gehäuseabschnitt umfasst, wobei der erste Gehäuseabschnitt und der zweite Gehäuseabschnitt durch eine fluidisch undurchlässige I<onturwand aneinander angrenzend ausgebildet sind. Ferner umfasst die I<onturwand eine zum ersten Gehäuseabschnitt orientierte Seite und eine zum zweiten Gehäuseabschnitt orientierte Seite, zumindest ein Fluidhandhabungselement, wobei das Fluidhandhabungselement ein Mittel zum Erzeugen eines steuerbar veränderlichen Magnetfelds, welches in dem ersten Gehäuseabschnitt angeordnet ist, und ein Mittel, welches durch das erzeugte Magnetfeld bewegbar ist und in dem zweiten Gehäuseabschnitt angeordnet ist, umfasst.

Dadurch ergibt sich beispielsweise der technische Vorteil, dass zwischen dem Mittel zum Erzeugen eines steuerbar veränderlichen Magnetfeldes und dem durch das erzeugte Magnetfeld bewegbare Mittel lediglich eine magnetische Kopplung besteht. Diese magnetische Kopplung wirkt durch die fluidisch undurchlässige I<onturwand hindurch und ermöglicht, dass das durch das erzeugte Magnetfeld bewegbare Mittel nasslaufend in dem zweiten Gehäuseabschnitt im Fluid anzuordnen. Das Mittel zum Erzeugen eines steuerbar veränderlichen Magnetfeldes hingegen, ist zusammen mit der Steuereinheit im "hydraulisch entkoppelten", trockenen ersten Gehäuseabschnitt angeordnet. Die Trennung zwischen wasserführendem zweiten Gehäuseabschnitt und der Elektronik im ersten Gehäuseabschnitt reduziert das Risiko von Leckagen und Kurzschlüssen. Zudem ist es nicht notwendig dynamische Dichtungen einzusetzen. Somit entsteht keine Verlustwärme durch Reibung und die Energieeffizienz nimmt zu. Insgesamt lässt sich dadurch ein höherer Wirkungsgrad erreichen.

Eine fluidisch undurchlässige I<onturwand im Sinne der Erfindung ist als kontinuierliche Trennschicht zu verstehen, welche zumindest zwischen dem Mittel zum Erzeugen eines steuerbar veränderlichen Magnetfelds und dem Mittel, welches durch das erzeugte Magnetfeld bewegbar ist, ohne Unterbrechungen kontinuierlich ausgebildet ist. Als fluidisch undurchlässig ist hierbei zu verstehen, dass kein Fluidaustausch durch die I<onturwand hindurch stattfinden kann. Die fluidisch undurchlässige I<onturwand kann beispielsweise auf ein Fluidhandhabungselement beschränkt sein. Alternativ kann die I<onturwand auch als kontinuierliche Trennschicht zur Aufnahme mehrerer Fluidhandhabungselemente verstanden werden. Im Gegensatz zu bekannten elastisch verformbaren Abdichtungen auf Elastomerbasis finden keine Leckagen aufgrund von Umströmung statt. Die undurchlässige I<onturwand versteht sich wie eine durchgehende Mantelfläche. Beispielsweise kann die kontinuierliche Trennschicht auch die Oberfläche eines Kunststoffkörpers sein, welcher das Mittel, welches durch das erzeugte Magnetfeld bewegbar ist, in sich trägt und welches durch das Mittel zum Erzeugen eines steuerbar veränderlichen Magnetfelds von der Außenfläche des Kunststoffkörpers steuerbar ist.

Als Mittel zum Erzeugen eines steuerbar veränderlichen Magnetfelds kann jedes Mittel verstanden werden, welches dazu geeignet ist mit Hilfe von elektrischem Strom ein magnetisches Feld zu erzeugen. Das magnetische Feld ist durch die Einspeisung von Strom steuerbar ausgebildet, was im einfachsten Fall zumindest das Ein- und Ausschalten des Magnetfeldes bedeutet. Geeigneter Weise ist es jedoch auch möglich, die Stärke des Magnetfeldes zwischen dem Ein- und Ausschalten zu variieren. Beispielsweise sind als derartige Mittel elektrische Spulenanordnungen, elektrische Magnete, Schrittmotoren, Schaltmagnete, Bürstenlose Motoren, 1<lauenmotoren oder aber auch elektrische Linearaktuatoren denkbar.

Hingegen sind als durch das erzeugte Magnetfeld bewegbare Mittel beispielsweise Permanentmagnete, ferromagnetische Körper oder Körper mit Werkstoffen auf Basis von seltenen Erden denkbar.

Gemäß einer vorteilhaften Weiterbildung der Erfindung weist das Mittel zum Erzeugen eines steuerbar veränderlichen Magnetfelds einen Stator und das durch das erzeugte Magnetfeld bewegbare Mittel einen Rotor auf. Durch die Rotor-Stator-Anordnung kann mittels der magnetischen Kopplung durch die fluidisch undurchlässige I<onturwand hindurch ein Drehmoment erzeugt werden. Alternativ kann das Fluidhandhabungselement beispielsweise einen Elektromotor, eine Spulenanordnung oder einen Schaltmagneten als Mittel zum Erzeugen eines steuerbar veränderlichen Magnetfelds aufweisen, welches in dem ersten Gehäuseabschnitt angeordnet ist.

Nach einer weiteren Ausführungsform, weist die I<onturwand eine zylinderförmige Ausbuchtung auf, welche einen Innenraum eines im ersten Gehäuseabschnitt angeordneten Stators zumindest im Wesentlichen füllt. Dadurch wird beispielsweise der technische Vorteil erreicht, dass die I<onturwand durch ihre Ausbuchtung die genaue Einbauposition des Stators vorgibt. Somit bekommt die I<onturwand eine Doppelfunktion. Einerseits die erfindungswesentliche fluidische Undurchlässigkeit und andererseits die Positionierung des Stators im ersten Gehäuseabschnitt.

Nach einer noch weiteren Ausführungsform, ist die zylinderförmige Ausbuchtung zum Aufnehmen eines im zweiten Gehäuseabschnitt angeordneten Rotors ausgebildet. Dadurch wird beispielsweise der zusätzliche Vorteil erreicht, dass ein im zweiten Gehäuseabschnitt angeordneter Rotor in Bezug auf den Stator optimal ausgerichtet ist. Zudem kann die zylinderförmige Ausbuchtung als Führung des Rotors im Betrieb dienen, wobei die fluidische Undurchlässigkeit nicht eingeschränkt wird und die Trennung zwischen wasserführendem zweiten Gehäuseabschnitt und der Elektronik im ersten Gehäuseabschnitt bleibt gewährleistet.

Nach einer weiteren vorteilhaften Ausführungsform, ist der zweite Gehäuseabschnitt fluidführend ausgebildet und umfasst zumindest einen Anschluss zum Ein- und/oder Ausströmen von Fluid. Dadurch wird beispielsweise der technische Vorteil erreicht, dass der zweite Gehäuseabschnitt ohne elektrische Schnittstellen konzipiert werden kann. Lediglich das Zuführen, das Umleiten und das Ableiten von Fluid steht im Vordergrund, wobei das Herstellen des zweiten Gehäuseabschnitts durch preiswerte Materialauswahl und die geeignete Fügeverfahren gekennzeichnet ist. Beispielsweise kann der zweite Gehäuseabschnitt mittels Vibrationsschweissen oder Spiegelschweissen hergestellt werden, was im Zusammenhang mit der elektronischen Steuereinheit aus thermischen Gründen problematisch wäre und somit nur getrennt umgesetzt werden kann. Es können auch mehrere Anschlüsse zum Ein- und/oder Ausströmen von Fluid realisiert werden. Die Anschlüsse stellen hierbei die Kundenschnittstelle dar. Es können Schlauchdurchmesser, Anzahl und die entsprechenden Positionen der Anschlüsse variiert werden. Je nach Kundenanforderungen kann auch die Richtung sowie die Ausrichtung (radial/axial) der Anschlüsse angepasst werden, wobei auch eine variable Verstellbarl<eit der Anschlüsse denkbar wäre.

Um die gesamte Vorrichtung möglichst flexibel an spezifische Kundenanforderungen anzupassen, kann jedem Fluidhandhabungselement eine andere Funktion in der Vorrichtung zugeordnet werden. Hierfür weist das Fluidhandhabungselement eine Fluidpumpe oder Fluidventil auf. Je nach Einsatzzweck wird also die Ausführung eines Fluidhandhabungselements umgesetzt, wobei in jeder Ausgestaltung die magnetische Kopplung in Verbindung mit der fluidisch undurchlässigen I<onturwand bestehen bleibt und das durch das erzeugte Magnetfeld bewegbare Mittel nasslaufend in dem zweiten Gehäuseabschnitt im Fluid angeordnet wird.

Nach einer bevorzugten Ausführungsform, ist dem Rotor ein Mittel zum Fördern und/ oder zum Steuern von Fluid zugeordnet. Aufgrund der magnetischen Kopplung zwischen Stator und Rotor, wird ein an dem Rotor angeordneter Magnet durch den Stator in Rotation versetzt. An dem Rotor selbst können zusätzlich unterschiedliche Mittel angeordnet werden, welche von der gewünschten Funktion des jeweiligen Fluidhandhabungselements abhängen. Zum Fördern eines Fluids kann beispielsweise eine Pumpe mit Impeller oder mit Laufrad eingesetzt werden. Zum Steuern oder Umleiten des Fluids kann beispielsweise ein Drehschieber oder ein Schaltventil eingesetzt werden.

Nach einer alternativen Ausführungsform, umfasst das Mittel ein Schaltelement. Dadurch kann beispielsweise der technische Vorteil erreicht werden, dass das Schaltelement als Drehschieber ausgebildet werden kann. Dies macht die Vorrichtung bzw. das Fluidhandhabungselement an verschiedene Fahrzeuge und verschiedene Funktionen anpassbar. Unterschiedliche Bauräume und unterschiedliche Anforderungen seitens eines Fahrzeugherstellers machen verschiedene Schaltungsstrategien notwendig. Beispielsweise kann mittels eines Drehschiebers Fluid umgeleitet oder vermischt werden und es können eine Vielzahl von Anschlüssen und Schaltmodi realisiert werden.

Nach einer alternativen Ausführungsform, umfasst das Mittel ein Laufrad. Dadurch kann beispielsweise der technische Vorteil erreicht werden, dass das Laufrad direkt in einen Fluidkreislauf integriert werden kann. Durch die Stator-Rotor-Anbindung kann somit aus der Rotation eine Pumpenfunktion realisiert werden. Beispielsweise ist das Laufrad als Impeller ausgebildet.

Nach einer zusätzlichen Ausführungsform, ist dem Rotor ein nasslaufendes Getriebe zugeordnet. Dadurch wird beispielsweise der technische Vorteil erreicht, dass das am Rotor erzeugte Drehmoment jeweils an die notwendige Funktion angepasst werden kann. Beispielsweise können verschiedene Stufen zur Übersetzung eingesetzt werden. Das Getriebe kann direkt im Fluid und somit in dem zweiten Gehäuseabschnitt angeordnet werden. Hierdurch werden keine dynamischen Dichtungen benötigt. Die potenziell notwendige Schmierung kann direkt über das Kühlwasser erfolgen und entstehende Verlustwärme durch Reibung wird direkt in das Kühlfluid abgegeben. Alternativ zu dieser Ausführungsform ist es ebenfalls möglich den Rotor ohne nasslaufendes Getriebe zu betreiben. Beispielsweise kann der Rotor mittels einer Dichtung gegenüber dem Fluid abgedichtet sein. In der Konsequenz ist der Rotor trocken betätigbar.

In einer besonderen Ausführungsform, ist dem ersten Gehäuseabschnitt eine elektrische Steuereinheit zum Steuern der Vorrichtung zugeordnet. Die elektrische Steuereinheit ist zur Funktion der Vorrichtung notwendig und kann sowohl außerhalb des ersten Gehäuseabschnitts als auch innerhalb des ersten Gehäuseabschnitts angeordnet werden. Es ist ebenfalls denkbar, die Vorrichtung mit einer kundenseitigen externen Steuereinheit zu betreiben, wobei hierfür eine Schnittstelle an dem ersten Gehäuseabschnitt bereitgestellt werden kann. Alternativ oder zusätzlich lässt sich die Steuereinheit jedoch innerhalb des ersten Gehäuseabschnitts anordnen.

Darauf aufbauend ist die elektrische Steuereinheit innerhalb des ersten Gehäuseabschnitts angrenzend an die fluidisch undurchlässige I<onturwand angeordnet. Es lässt sich beispielsweise der technische Vorteil erreichen, dass durch das Anordnen der elektrischen Steuereinheit an die fluidisch undurchlässige I<onturwand innerhalb des ersten Gehäuseabschnitts, die elektrische Steuereinheit effektiv gekühlt werden kann. Diese Kühlung erfolgt zudem ohne ein Risiko des unmittelbaren Kontakts mit dem Fluid, wodurch Kurzschlüsse vermieden werden. Zusätzlich kann Fluid mit Verlustwärme geheizt werden. Ein weiterer Vorteil ist, dass die niedrige Kühlmitteltemperatur einen großen Temperaturunterschied zu der Chip-Temperatur der Leistungselektronik hat. Beispielsweise könnte ein Temperatursensor auf Seiten der elektrischen Steuereinheit - also im trockenen Bereich - angeordnet werden, um die Fluidtemperatur zu messen. Der Sensor würde also durch die fluidisch undurchlässige I<onturwand hindurch messen, wobei die Auswertung des Sensorsignals unmittelbar im trockenen Bereich des ersten Gehäuseabschnitts stattfinden kann. Gemäß einer vorteilhaften Ausführungsform kann der Temperatursensor auch die I<onturwand mit einer statischen Dichtung durchtrennen, falls eine schnellere Ansprechzeit des Sensors erforderlich ist.

Gemäß einer weiteren Ausführungsform, umfasst die Vorrichtung ein zweites Fluidhandhabungselement, welches eine Fluidpumpe aufweist. Dadurch kann beispielsweise der technische Vorteil erreicht werden, dass durch die zweite Fluidpumpe ein zusätzlicher Fluidkreislauf gesteuert werden kann.

Nach einer weiteren Ausführungsform, weist der erste Gehäuseabschnitt ein abnehmbares erstes Abdeckelement auf. Dadurch wird beispielsweise der technische Vorteil erreicht, dass zu Reparaturzwecken direkt auf den Trockenbereich und die Bestandteile der Elektronik in der Vorrichtung zugegriffen werden kann. Inspektionen oder Reparaturen werden dadurch deutlich vereinfacht.

Nach einer zusätzlichen Ausführungsform, weist der zweite Gehäuseabschnitt ein abnehmbares zweites Abdeckelement auf. Ebenfalls kann dadurch der technische Vorteil erreicht werden, dass zu Reparaturzwecken direkt auf alle nasslaufenden Bestandteile der Vorrichtung zugegriffen werden kann. Inspektionen oder Reparaturen werden ebenfalls erheblich vereinfacht.

Nach einer besonders bevorzugten Ausführungsform weist die Vorrichtung einen ersten Fluidkreislauf, welcher dem ersten Fluidhandhabungselement zugeordnet ist, und einen zweiten Fluidkreislauf, welcher dem zweiten Fluidhandhabungselement zugeordnet ist, auf. Dies macht die Vorrichtung besonders einfach betreibbar. In Kombination mit der doppelten Drehschieberanordnung könnte man beispielsweise mit zwei Fluidhandhabungselementen mit jeweils zwei Schaltstellungen in einem Drehschieber insgesamt drei Fluidkreisläufe betreiben. In Kombination mit serieller oder paralleler Anordnung lassen zusätzlich Funktionalitäten erreichen.

Gemäß einer besonderen Ausführungsform, sind die Rotorachsen der Fluidhandhabungselemente parallel zueinander angeordnet. Dadurch wird der besondere Vorteil erreicht, dass die Fertigung und die Montage in dieser Anordnung besonders einfach sind. Zusätzlich können einzelne Baugruppen einfach getestet und ausgetauscht werden.

Um die Flexibilität und die Integration der Vorrichtung in ein Fahrzeug zu verbessern, sind die Anschlüsse zum Ein- und/ oder Ausströmen von Fluid in einer Ebene angeordnet, welche in etwa orthogonal zur Orientierung der Rotorachsen der Fluidhandhabungselemente angeordnet ist.

Die Erfindung wird nachstehend anhand der Beschreibung von Ausführungsbeispielen unter Bezugnahme auf die beiliegenden Zeichnungen näher erläutert. Dabei ergeben sich aus der nachfolgenden Beschreibung und der Gesamtheit der Patentansprüche weitere vorteilhafte Ausführungsformen und Merkmalskombinationen der Erfindung.

Die zu der Erläuterung der Ausführungsbeispiele verwendeten Zeichnungen zeigen in:
Fig. 1 eine Explosionsdarstellung einer erfindungsgemäßen Vorrichtung zur Handhabung eines Fluids nach einer ersten Ausführungsform;
Fig. 2A einen detaillierten Längsschnitt eines Fluidhandhabungselements der erfindungsgemäßen Vorrichtung;
Fig. 2B einen detaillierten Längsschnitt eines Fluidhandhabungselements der erfindungsgemäßen Vorrichtung nach einer alternativen Ausführungsform;
Fig. 2C einen detaillierten Längsschnitt eines Fluidhandhabungselements der erfindungsgemäßen Vorrichtung nach einer weiteren Ausführungsform;
Fig. 2D einen detaillierten Längsschnitt eines Fluidhandhabungselements der erfindungsgemäßen Vorrichtung nach einer weiteren Ausführungsform;
Fig. 2E einen detaillierten Längsschnitt eines Fluidhandhabungselements der erfindungsgemäßen Vorrichtung nach einer weiteren Ausführungsform;
Fig. 2F einen detaillierten Längsschnitt eines Fluidhandhabungselements der erfindungsgemäßen Vorrichtung nach einer weiteren Ausführungsform;
Fig. 2G einen detaillierten Längsschnitt der erfindungsgemäßen Vorrichtung nach einer weiteren Ausführungsform;
Fig. 3 eine Längsschnittansicht eines Fluidhandhabungselements der erfindungsgemäßen Vorrichtung;
Fig. 4 einen detaillierten Längsschnitt eines weiteren Fluidhandhabungselements der erfindungsgemäßen Vorrichtung;
Fig. 5 eine schematische Darstellung eines nasslaufenden Getriebes der erfindungsgemäßen Vorrichtung;
Fig. 6 mehrere schematische Darstellungen einer Drehschieberanordnung der erfindungsgemäßen Vorrichtung; und
Fig. 7 eine Explosionsdarstellung einer erfindungsgemäßen Vorrichtung zur Handhabung eines Fluids nach einer weiteren Ausführungsform.

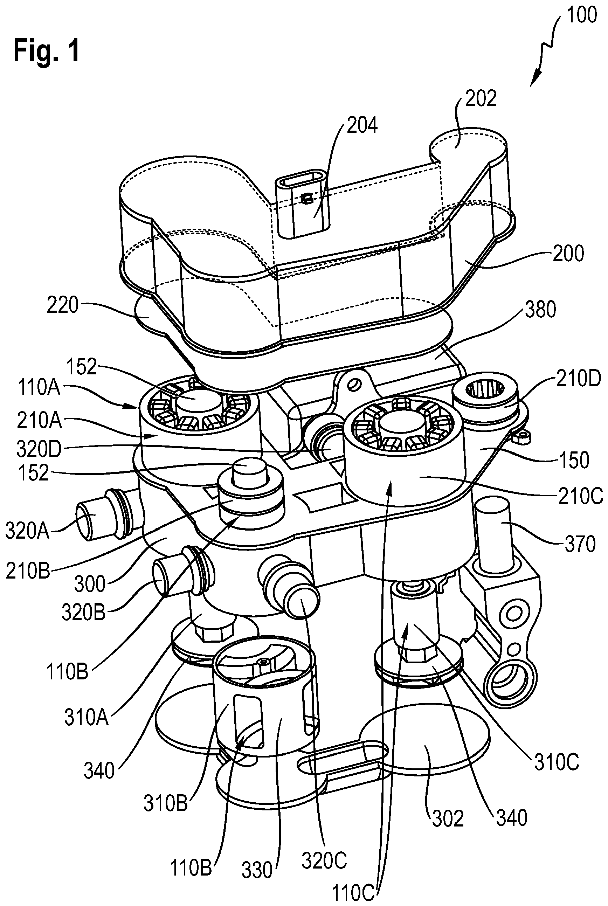

Die Fig. 1 zeigt eine Explosionsdarstellung einer erfindungsgemäßen Vorrichtung 100 zur Handhabung eines Fluids nach einer ersten Ausführungsform. Die Vorrichtung 100 ist für den Einsatz in einem zumindest teilweise elektrisch betriebenen Fahrzeug vorgesehen.

Somit kann sie sowohl in rein elektrisch betriebenen Fahrzeugen als auch in Hybridfahrzeugen eingesetzt werden.

Die Vorrichtung 100 umfasst einen ersten Gehäuseabschnitt 200 und einen zweiten Gehäuseabschnitt 300, wobei der erste Gehäuseabschnitt 200 und der zweite Gehäuseabschnitt 300 durch eine fluidisch undurchlässige I<onturwand 150 aneinander angrenzend ausgebildet sind. Die I<onturwand 150 ist einstückig ausgebildet. In dieser Ausführungsform ist die I<onturwand 150 gleichzeitig die Außenwand des zweiten Gehäuseabschnitts 300, wodurch die Außenwand identisch ist mit der zum ersten Gehäuseabschnitt 200 orientierten Seite des zweiten Gehäuseabschnitts 300.

Die I<onturwand 150 weist auf der zum ersten Gehäuseabschnitt 200 orientierten Seite mehrere zylinderförmige Ausbuchtungen 152 auf. Auf diese zylinderförmige Ausbuchtungen 152 sind Mittel (210A, 210B, 210C) zum Erzeugen eines steuerbar veränderlichen Magnetfelds in Form von Statoren aufgebracht. Die zylinderförmigen Ausbuchtungen 152 ragen jeweils in den Innenraum jedes angeordneten Stators hinein und füllen diesen Innenraum derart aus, dass sich auf Seiten des zweiten Gehäuseabschnitts 300 Hohlzylinder ausbilden in welche dann die Mittel 310A, 310B, 310C, welche durch das erzeugte Magnetfeld bewegbar ausgebildet sind, einbringen lassen. Die Mittel 210A, 210B, 210C, 210D zum Erzeugen eines steuerbar veränderlichen Magnetfelds sind in der vorliegenden Ausführungsform als Statoren von Schrittmotoren ausgebildet, jedoch können sie ebenso als gewöhnliche Elektromotoren, Brushless DC-Motoren wie beispielsweise 1<lauenmotoren oder als Magnetventile ausgebildet sein.

Auf einer zum zweiten Gehäuseabschnitt 300 orientierten Seite (nicht gezeigt) der I<onturwand 150 befinden sich Mittel 310A, 310B, 310C, welche durch das erzeugte Magnetfeld des jeweils zugeordneten Mittels 210A, 210B, 210C zum Erzeugen eines steuerbar veränderlichen Magnetfelds, bewegbar ausgebildet sind. Die Mittel 310A, 310B, 310C, welche durch das erzeugte Magnetfeld bewegbar ausgebildet sind, weisen jeweils einen Rotor mit einem zugeordneten Magnet auf. Der Rotor wird durch den Stator in Rotation versetzt, wodurch die Mittel 310A, 310B, 310C welche durch das Magnetfeld bewegbar ausgebildet sind durch den Stator steuerbar sind. Den Mittel 310A, 310B, 310C, welche durch das erzeugte Magnetfeld bewegbar sind, werden jeweils Mittel zum Fördern und/ oder zum Steuern von Fluid zugeordnet. So ist beispielsweise dem Stator des Mittels 210B zum Erzeugen eines steuerbar veränderlichen Magnetfeldes ein Schaltelement 330 zugeordnet, welches als Drehschieber ausgebildet ist. Durch den Drehschieber können unterschiedliche Bauräume und unterschiedliche Anforderungen mit jeweils verschiedene Schaltungsstrategien realisiert werden. So kann Fluid umgeleitet werden und unterschiedliche Anschlüsse und Schaltmodi sind miteinander kombinierbar.

Den Statoren der Mittel 210A, 210C zum Erzeugen eines steuerbar veränderlichen Magnetfeldes sind jeweils ein Laufrad 340 zugeordnet. Das Laufrad ist beispielsweise als Impeller ausgebildet und wird direkt in einen Fluidkreislauf innerhalb des zweiten Gehäuseabschnitts 300 integriert. Durch den Stator wird über die magnetische Kopplung zum Rotor ein Drehmoment erzeugt, welches zu einer Rotation des Impellers führt. Somit wird der Impeller als Pumpe des jeweils zugeordneten Fluidkreislaufs nutzbar.

Die Rotoren, welche den Mittel 310A, 310B, 310C welche durch das Magnetfeld bewegbar ausgebildet sind, zugeordnet sind, sind jeweils in die zylinderförmige Ausbuchtungen 152 der I<onturwand 150 im zweiten Gehäuseabschnitt 300 eingebracht. Mit anderen Worten wird durch die zylindrische Ausbuchtung 152 sowohl die genaue Anordnung eines Stators im ersten Gehäuseabschnitt 200 als auch die genaue Anordnung eines Rotors im zweiten Gehäuseabschnitt 300 ermöglicht, wodurch eine exakte Zuordnung von Rotor und Stator untereinander realisiert wird. Die zylindrische Ausbuchtung erfüllt also die Doppelfunktion der Zuordnung von Rotor und Stator einerseits und die fluiddichte Trennung zwischen erstem Gehäuseabschnitt 200 und zweitem Gehäuseabschnitt 300, welcher als hydraulische Entkopplung bezeichnet werden kann.

Die Kombination aus Mittel 210A, 210B, 210C zum Erzeugen eines steuerbar veränderlichen Magnetfelds in Form eines Stators, welche im trockenen ersten Gehäuseabschnitt 200 angeordnet sind, das jeweils zugeordnete Mittel 310A, 310B, 310C, welches durch das erzeugte Magnetfeld bewegbar und im nassen zweiten Gehäuseabschnitt 300 angeordnet ist, und über die I<onturwand 152 hinweg durch eine magnetische Kopplung betreibbar ist, beschreiben jeweils ein Fluidhandhabungselement 110A, 110B, 110C.

Eine Ausnahme bildet hierbei das Mittel 210D zum Erzeugen eines steuerbar veränderlichen Magnetfelds in Form eines Schrittmotors. Dieses ist im trockenen ersten Gehäuseabschnitt 200 zugeordnet. Dem Schrittmotor ist jedoch eine Expansionsventils 370 zugeordnet. Im Unterschied zu den bereits beschriebenen Fluidhandhabungselementen 110A, 110B, 110C existiert keine durchgehende fluidundurchlässige I<onturwand 150 zwischen dem Mittel 210D zum Erzeugen eines steuerbar veränderlichen Magnetfelds und dem Mittel, welches durch das erzeugte Magnetfeld bewegbar ist. Letzteres ist in das Gehäuse des Expansionsventils 370 integriert und das Expansionsventil 370 ist lediglich parallel zu den anderen Fluidhandhabungselementen 110A, 110B, 110C am Gehäuse der Vorrichtung 100 angeordnet, wobei der Schrittmotor in den trockenen Bereich des ersten Gehäuseabschnitts 200 integriert ist. Um die notwendige Öffnung in der fluidundurchlässigen I<onturwand 150 zum Durchführen des Expansionsventils 370 abzudichten, empfiehlt sich das Anordnen eines O-Rings.

Insgesamt verfügt die Vorrichtung 100 in der vorliegenden Ausführungsform über ein erstes Fluidhandhabungselement 110A, welches als Fluidpumpe ausgebildet ist.

Zusätzlich umfasst die Vorrichtung 100 ein zweites Fluidhandhabungselement 110C, welches ebenfalls eine Fluidpumpe aufweist. Dadurch können zwei voneinander getrennte Fluidkreisläufe betrieben werden, bzw. es lässt sich damit Fluid von zwei getrennten Fluidkreisläufen befördern. Zusätzlich weist die Vorrichtung 100 ein drittes Fluidhandhabungselement 110B auf, welches ein Schaltelement 330 oder ein Fluidventil umfasst. Das Fluidventil ist mit einem Drehschieber ausgebildet und der Drehschieber macht die Vorrichtung 100 an verschiedene Fahrzeuge anpassbar. Unterschiedliche Bauräume und unterschiedliche Anforderungen des Fahrzeugs können beispielsweise durch Umleiten des Fluids realisiert werden. Durch Umschalten des Drehschiebers kann von parallelen Fluidkreisläufen auf serielle Fluidkreisläufe umgeschaltet werden. Zusätzlich können proportionale Mischverhältnisse dargestellt werden. Zusätzlich umfasst die Vorrichtung 100 ein Mittel 210D zum Erzeugen eines steuerbar veränderlichen Magnetfelds in Form eines Schrittmotors, wobei diesem das Expansionsventil 370 zum Betreiben eines Wärmetauschers 380 zugordnet ist.

Alle der Fluidhandhabungselemente (1 10A, 1 10B, 110C) sind derart an der Vorrichtung 100 angeordnet, dass die Rotorachsen (nicht gezeigt) der Fluidhandhabungselemente 110A, 110B, 110C parallel zueinander angeordnet sind. Dies vereinfacht die Fertigung und die Montage der gesamten Vorrichtung 100 erheblich, wobei zusätzlich einzelne Baugruppen einfach getestet und ausgetauscht werden können.

An den zweiten Gehäuseabschnitt 300 sind mehrere Anschlüsse 320A, 320B, 320C, 320D zum Ein- und/ oder Ausströmen von Fluid angeordnet. Die Anschlüsse dienen als Kundenschnittstelle und können je nach Anforderung in Bezug auf den Schlauchdurchmesser und die entsprechenden Positionen variiert werden. Die vorliegende Ausführungsform umfasst insgesamt vier Anschlüsse 320A, 320B, 320C, 320D, welche Fluid seitlich aus dem zweiten Gehäuseabschnitt 300 ausleiten bzw. Fluid seitlich in den zweiten Gehäuseabschnitt 300 einleiten. Ein Anschluss 320D dient der Verbindung mit einem Wärmetauscher 380. Der Wärmetauscher 380 ist dem Mittel 210D zum Erzeugen eines steuerbar veränderlichen Magnetfelds in Form des Schrittmotors im trockenen ersten Gehäuseabschnitt 200 und das Expansionsventils 370 zugeordnet.

Die Vorrichtung 100 umfasst ferner eine elektrische Steuereinheit 220, welche ebenfalls im trockenen ersten Gehäuseabschnitt 200 angeordnet ist. Die elektrische Steuereinheit 220 ist als flächiger Körper ausgebildet wie es beispielsweise bei Steuerplatinen oder dergleichen üblich ist. Die Steuereinheit 220 ist oberhalb der als Statoren ausgebildeten Mittel zum Erzeugen eines steuerbar veränderlichen Magnetfelds 210A, 210B, 210C, 210D angeordnet. Die elektrische Steuereinheit 220 ist zur Steuerung der Vorrichtung 100 notwendig. Beispielsweise könnte die Steuereinheit 220 auch zwischen den einzelnen Statoren innerhalb des ersten Gehäuseabschnitts 200, jedoch unmittelbar angrenzend an der fluidisch undurchlässigen I<onturwand 150, angeordnet werden. Dies wäre vorteilhaft da die elektrische Steuereinheit 220 zusätzlich gekühlt werden könnte, ohne ein Risiko des unmittelbaren Kontakts mit dem Fluid einzugehen. Zusätzlich könnte mit der Verlustwärme geheizt werden, welche im Betrieb der elektrischen Steuereinheit 220 entsteht.

Der erste Gehäuseabschnitt 200 umfasst ein abnehmbares erstes Abdeckelement 202. Dieses erste Abdeckelement 202 vereinfacht den Zugang zu gesamten Elektronik - wie beispielsweise elektrische Steuereinheit 220 oder die Mittel zum Erzeugen eines steuerbar veränderlichen Magnetfelds 210A, 210B, 210C, 210D -, welche innerhalb des ersten Gehäuseabschnitts 200 angeordnet ist. Somit kann zu Reparaturzwecken, Inspektionen oder auch zu Testzwecken direkt auf den Trockenbereich und die Bestandteile der Elektronik in der Vorrichtung 100 zugegriffen werden. Zusätzlich umfasst das erste Abdeckelement 202 einen Steckeranschluss 204, welcher als zusätzliche Schnittstelle zum Kunden eingesetzt werden kann. Beispielsweise kann die Vorrichtung 100 mittels einer I<undeneigenen Steuereinheit verbunden und betrieben werden.

Entsprechend verfügt der zweite Gehäuseabschnitt 300 auch über ein abnehmbares zweites Abdeckelement 302. Auch dieses zweite Abdeckelement 302 kann zu Reparaturzwecken entfernt werden, wodurch direkt auf alle nasslaufenden Bestandteile der Vorrichtung 100 zugegriffen werden kann. Beispielsweise können auch defekte Bestandteile gewechselt werden, ohne dass direkt die gesamte Vorrichtung 100 aus dem betreffenden Fahrzeug ausgebaut werden muss.

Wie bereits ausgeführt sind der erste Gehäuseabschnitt 200 und der zweite Gehäuseabschnitt 300 durch die fluidisch undurchlässige I<onturwand 150 aneinander angrenzend ausgebildet. Die I<onturwand 150 ist einstückig ausgebildet. In dieser Ausführungsform sind nahezu alle Fluidhandhabungselemente 110A, 110B, 110C an einer durchgehenden fluidisch undurchlässigen I<onturwand 150 angeordnet. Die durchgehende fluidisch undurchlässige I<onturwand 150 ist gleichzeitig die Außenwand des zweiten Gehäuseabschnitts 300.

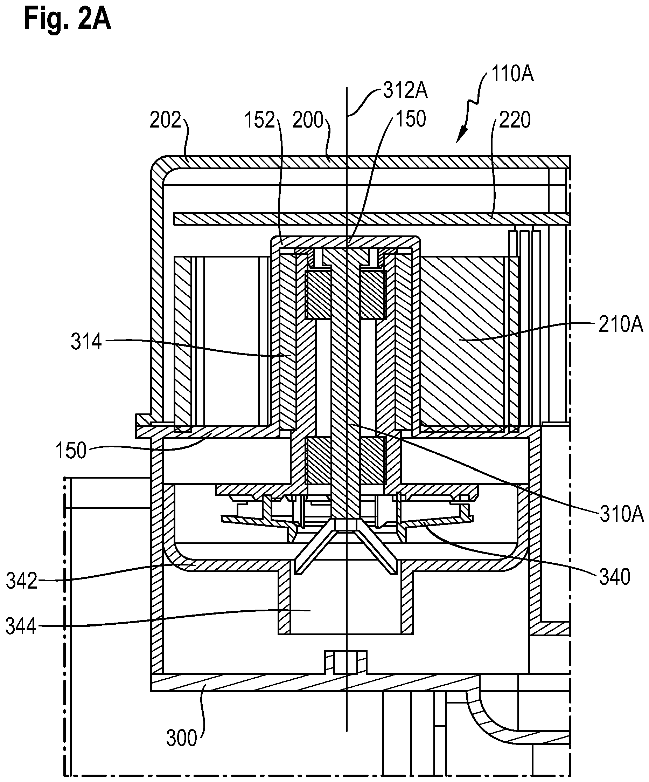

Die Fig. 2A zeigt einen detaillierten Längsschnitt eines Fluidhandhabungselements 110A der erfindungsgemäßen Vorrichtung 100. Die Vorrichtung 100 umfasst den ersten Gehäuseabschnitt 200 und den zweiten Gehäuseabschnitt 300, wobei der erste Gehäuseabschnitt 200 und der zweite Gehäuseabschnitt 300 durch die fluidisch undurchlässige I<onturwand 150 aneinander angrenzend ausgebildet sind. Die I<onturwand 150 ist gleichzeitig die Außenwand des zweiten Gehäuseabschnitts 300, wodurch die Außenwand identisch ist mit der zum ersten Gehäuseabschnitt 200 orientierten Seite des zweiten Gehäuseabschnitts 300.

Die I<onturwand 150 weist auf der zum ersten Gehäuseabschnitt 200 orientierten Seite eine Ausbuchtungen 152 auf. Die Ausbuchtung 152 ist von einem Mittel 210A zum Erzeugen eines steuerbar veränderlichen Magnetfelds in Form eines Stators umgeben und die Ausbuchtung 152 ragt vollständig durch den Innenraum des Stators hindurch, wodurch dieser nahezu vollständig ausgefüllt ist.

Zusätzlich befindet sich innerhalb des ersten Gehäuseabschnitts 200 die elektrische Steuereinheit 220 zum Steuern der Vorrichtung 100. Sie ist oberhalb des Mittels 210A zum Erzeugen eines steuerbar veränderlichen Magnetfelds in Form eines Stators angeordnet.

Das Mittel 210A zum Erzeugen eines steuerbar veränderlichen Magnetfelds in Form eines Stators und die elektrische Steuereinheit 220 zum Steuern der Vorrichtung 100 sind von einem ersten Abdeckelement 202 verschlossen und gegen äußere Einflüsse wie Schmutz, Feuchtigkeit oder mechanische Einwirkungen geschützt.

Innerhalb des zweiten Gehäuseabschnitts 300, welcher fluidführend ausgebildet ist, ist ein Mittel 310A welches durch das erzeugte Magnetfeld bewegbar ist, angeordnet. Das Mittel 310A welches durch das erzeugte Magnetfeld bewegbar ist, weist einen Rotor 314 mit einem zugeordneten Magnet auf. Der Rotor 314 ist exakt in die Ausbuchtung 152 der I<onturwand 150 eingeführt, wodurch die exakte Ausrichtung zwischen Rotor 314 und Stator gegeben ist. Der Rotor 314 wird durch den Stator in Rotation versetzt, wodurch das das Mittel 310A, welches durch das Magnetfeld bewegbar ist, in Rotation versetzt wird und somit durch den Stator steuerbar ist. Um die Funktion der Rotor-Stator-Anordnung zu verbessern, wird zwischen Rotor 314 und der Ausbuchtung 152 in einer radialen Richtung ein Isolator (nicht gezeigt) angeordnet. Unterhalb des Rotors 314 ist ein Laufrad 340 angeordnet, welches durch Rotation als Pumpe zum Fördern des Fluids genutzt werden kann. Das Laufrad 340 befindet sich innerhalb eine Laufradgehäuses 342, wobei sich am unteren Ende des Laufradgehäuses 342 eine Fluideinströmungsöffnung 344 befindet.

Fluid wird also durch die Fluideinströmungsöffnung 344 in das Laufradgehäuses 342 eingeströmt und durch die Rotation des Laufrades 340 in radialer Richtung durch eine Fluidausströmöffnung (nicht gezeigt) ausgeströmt. Das Laufradgehäuse 342 kann hierbei als eigenständiges Bauteil in den zweiten Gehäuseabschnitt 300 eingebracht werden, um in Abhängigkeit der Laufradgröße und/ oder der gewünschten Pumpenleistung variabel zu sein. Der Rotor 314 umfasst eine Rotorachse 312A, bezüglicher welcher das Mittel 310A, welches durch das Magnetfeld bewegbar ist, einschließlich der Rotors 314 und das Laufrad 340 rotationssymmetrisch angeordnet sind.

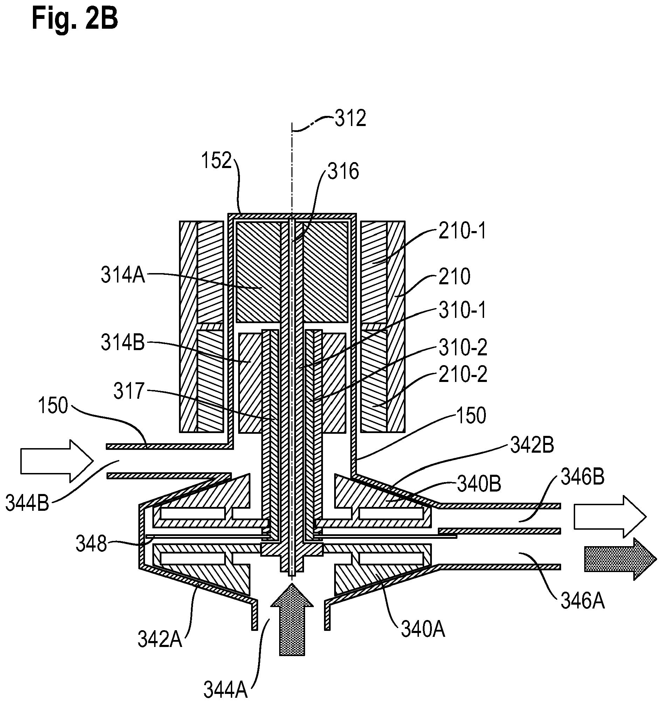

Die Fig. 2B zeigt eine Längsschnittansicht einer alternativen Ausführungsform eines Fluidhandhabungselements 110 der erfindungsgemäßen Vorrichtung 100. Auch diese Ausführungsform umfasst den ersten Gehäuseabschnitt (nicht gezeigt) und den zweiten Gehäuseabschnitt (nicht gezeigt), wobei der erste Gehäuseabschnitt 200 und der zweite Gehäuseabschnitt 300 durch die fluidisch undurchlässige I<onturwand 150 aneinander angrenzend ausgebildet sind. Die I<onturwand 150 weist auf der zum ersten Gehäuseabschnitt 200 orientierten Seite eine Ausbuchtungen 152 auf. Die Ausbuchtung 152 ist von einem Mittel 210 zum Erzeugen eines steuerbar veränderlichen Magnetfelds in Form eines Stators umgeben. Der Stator umfasst einen ersten Stator 210-1 und einen zweiten Stator 210-2. Der erste Stator 210-1 und der zweite Stator 210-2 sind in Richtung der Rotorachse 312 aneinander angrenzend angeordnet.

Innerhalb des zweiten Gehäuseabschnitts 300, welcher fluidführend ausgebildet ist, ist das Mittel, welches durch das erzeugte Magnetfeld bewegbar ist, angeordnet. Das Mittel, welches durch das erzeugte Magnetfeld bewegbar ist, umfasst ein erstes Mittel 310-1, welches durch das erzeugte Magnetfeld bewegbar ist, und ein zweites Mittel 310-2, welches durch das erzeugte Magnetfeld bewegbar ist.

Das erste Mittel 310-1, welches durch das erzeugte Magnetfeld bewegbar ist, ist hierbei dem Magnetfeld des ersten Stators 210-1 zugeordnet und das zweite Mittel 310-2, welches durch das erzeugte Magnetfeld bewegbar ist, ist dem Magnetfeld des zweiten Stators 210-2 zugeordnet.

Weiter umfasst das erste Mittel 310-1, welches durch das erzeugte Magnetfeld des ersten Stators 210-1 bewegbar ist, einen erster Rotor 314A mit einem zugeordneten Magnet.

Entsprechend umfasst das zweite Mittel 310-2, welches durch das erzeugte Magnetfeld des zweiten Stators 210-2 bewegbar ist, einen zweiten Rotor 314B mit einem zugeordneten Magnet.

Beide Rotoren 314A, 314B sind im zweiten Gehäuseabschnitt 300 präzise in die Ausbuchtung 152 der I<onturwand 150 eingeführt. Der erste Rotor 314A ist hierbei dem ersten Stator 210-1 zugeordnet. Der erste Rotor 314A wird durch den ersten Stator 210-1 in Rotation versetzt, wodurch das erste Mittel 310-1, welches durch das Magnetfeld des ersten Stators 210-1 bewegbar ist, in Rotation versetzt werden kann und somit durch den ersten Stator 210-1 steuerbar ist.

Der zweite Rotor 314B ist dem zweiten Stator 210-2 zugeordnet. Der zweite Rotor 314B wird durch den zweiten Stator 210-2 in Rotation versetzt, wodurch das zweite Mittel 310-2, welches durch das Magnetfeld des zweiten Stators 210-2 bewegbar ist, in Rotation versetzt werden kann und somit durch den zweiten Stator 210-2 steuerbar ist.

Über eine Rotorwelle 316 ist der erste Rotor 314A mit einem ersten Laufrad 340A verbunden, welches durch Rotation als Pumpe zum Fördern des Fluids genutzt werden kann.

Das erste Laufrad 340A befindet sich innerhalb eines Laufradgehäuses 342A, wobei sich am unteren Ende des Laufradgehäuses 342A eine Fluideinströmungsöffnung 344A befindet. Fluid wird also durch die Fluideinströmungsöffnung 344A in das Laufradgehäuse 342A eingeströmt und durch die Rotation des Laufrades 340A in radialer Richtung durch eine Fluidausströmöffnung 346A ausgeströmt.

Der zweite Rotor 314B ist über eine Rotorhohlwelle 317 mit einem zweiten Laufrad 340B verbunden, welches durch Rotation als Pumpe zum Fördern des Fluids genutzt werden kann. Das zweite Laufrad 340B befindet sich innerhalb eines Laufradgehäuses 342B, wobei Fluid über eine seitlich angeordnete Fluideinströmungsöffnung 344B in das Laufradgehäuses 342B eingeströmt wird. Durch die Rotation des Laufrades 340B wird das Fluid in radialer Richtung durch eine Fluidausströmöffnung 346B ausgeströmt.

Das erste Laufradgehäuse 342A und das zweite Laufradgehäuse 342B sind mittels eines Trennelements 348 voneinander getrennt ausgebildet. Die Rotorwelle 316, welche dem ersten Rotor 314A und dem ersten Stator 210-1 zugeordnet ist, erstreckt sich durch die Rotorhohlwelle 317 und durch das zweite Laufradgehäuse 342B hindurch. Beispielsweise kann die Rotorhohlwelle 317 unmittelbar an dem Trennelement 348 fixiert werden.

Das erste Laufrad 340A kann durch gezieltes Ansteuern des ersten Stators 210-1 durch die elektrische Steuereinheit 220 (nicht gezeigt) betrieben werden. Das zweite Laufrad 340B kann unabhängig von dem ersten Laufrad 340A durch gezieltes Ansteuern des zweiten Stators 210-2 betrieben werden. Hierbei umfassen die Rotoren 314A, 314B eine gemeinsame Rotorachse 312, bezüglicher welcher sowohl das erste Mittel 310-1, welches durch das erzeugte Magnetfeld des ersten Stators 210-1 bewegbar ist, als auch das zweite Mittel 310-2, welches durch das erzeugte Magnetfeld des zweiten Stators 210-2 bewegbar ist, rotationssymmetrische angeordnet sind.

Somit können in einem kompakten Gehäuse zwei verschieden Fluidpumpen angeordnet und betrieben werden. Dadurch ergibt sich der zusätzliche Vorteil, dass zwei unterschiedliche Fluidkreisläufe getrennt voneinander in der Vorrichtung 100 gefördert werden können. Durch die Trennung des Stators 210 in einen ersten Stator 210-1 und einen zweiten Stator 210-2, können die beiden Pumpen mit unterschiedlicher und voneinander abweichender Drehzahl gesteuert werden. Somit ergibt sich ein hohes Maß an Flexibilität und es ist möglich unterschiedliche Betriebsmodi in getrennten Fluidkreisläufen zu verfolgen, ohne irgendwelche Abhängigkeiten oder Einflüsse zwischen den Fluidkreisläufen zu berücksichtigen.

Um die Funktion der Vorrichtung 100 zu verbessern, kann zwischen dem ersten Rotor 314A und der fluidundurchlässigen I<onturwand 150 in einer radialen Richtung ein Isolator (nicht gezeigt) angeordnet sein. Entsprechend kann zwischen dem zweiten Rotor 314B und der fluidundurchlässigen I<onturwand 150 in einer radialen Richtung ein Isolator (nicht gezeigt) angeordnet sein.

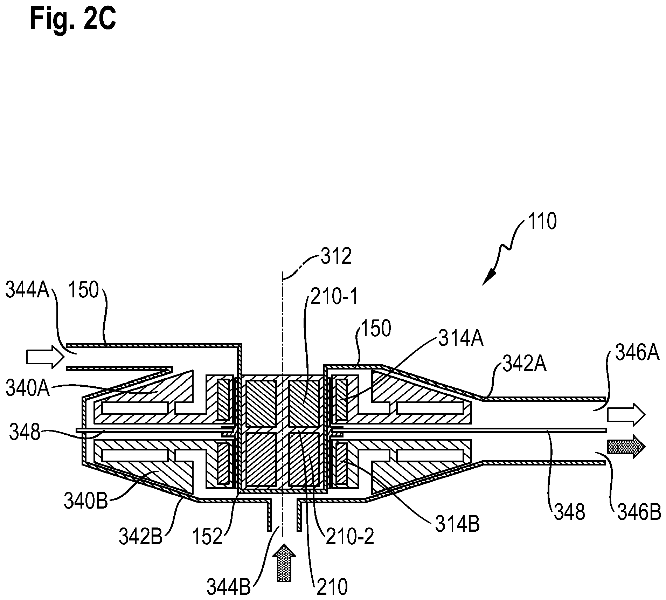

Die Fig. 2C zeigt einen detaillierten Längsschnitt eines Fluidhandhabungselements 110 der erfindungsgemäßen Vorrichtung 100 nach einer weiteren Ausführungsform. Auch diese Ausführungsform umfasst den ersten Gehäuseabschnitt (nicht gezeigt) und den zweiten Gehäuseabschnitt (nicht gezeigt), wobei der erste Gehäuseabschnitt 200 und der zweite Gehäuseabschnitt 300 durch die fluidisch undurchlässige I<onturwand 150 aneinander angrenzend ausgebildet sind. Die I<onturwand 150 weist auf der zum zweiten Gehäuseabschnitt 300 orientierten Seite eine Ausbuchtungen 152 auf. In die Ausbuchtung 152 ist ein Mittel 210 zum Erzeugen eines steuerbar veränderlichen Magnetfelds in Form eines Stators eingebracht. Der Stator umfasst einen ersten Stator 210-1 und einen zweiten Stator 210-2. Der erste Stator 210-1 und der zweite Stator 210-2 sind in Richtung der Rotorachse 312 aneinander angrenzend angeordnet.

In dem zweiten Gehäuseabschnitt 300, welcher fluidführend ausgebildet ist, ist das Mittel, welches durch das erzeugte Magnetfeld bewegbar ist, angeordnet. Das Mittel, welches durch das erzeugte Magnetfeld bewegbar ist, umfasst einen ersten Rotor 314A und einen zweiten Rotor 314B.

Der erste Rotor 314A ist hierbei dem Magnetfeld des ersten Stators 210-1 zugeordnet und der zweite Rotor 314B, ist dem Magnetfeld des zweiten Stators 210-2 zugeordnet.

Beide Rotoren 314A, 314B sind im zweiten Gehäuseabschnitt 300 um die Ausbuchtung 152 der I<onturwand 150 herum angeordnet. Der erste Rotor 314A ist hierbei dem ersten Stator 210-1 zugeordnet und wird durch den ersten Stator 210-1 in Rotation versetzt und ist somit durch den ersten Stator 210-1 steuerbar.

Der erste Rotor 314A ist mit einem ersten Laufrad 340A verbunden, welches durch Rotation als Pumpe zum Fördern des Fluids genutzt werden kann. Das erste Laufrad 340A ist radial außerhalb des ersten Rotors 314A angeordnet und befindet sich innerhalb eines Laufradgehäuses 342A.

Über eine seitlich angeordnete Fluideinströmungsöffnung 344A wird Fluid in das Laufradgehäuses 342A eingeströmt und durch die Rotation des Laufrades 340A in radialer Richtung durch eine Fluidausströmöffnung 346A ausgeströmt.

Der zweite Rotor 314B ist dem zweiten Stator 210-2 zugeordnet. Der zweite Rotor 314B wird durch den zweiten Stator 210-2 in Rotation versetzt und ist somit durch den zweiten Stator 210-2 steuerbar.

Der zweite Rotor 314B ist mit einem zweiten Laufrad 340B verbunden, welches durch Rotation als Pumpe zum Fördern des Fluids genutzt werden kann. Das zweite Laufrad 340B befindet sich radial außerhalb des zweiten Rotors 314B und ist in einem Laufradgehäuse 342B angeordnet. Fluid wird von unten über eine Fluideinströmungsöffnung 344B in das Laufradgehäuses 342B eingeströmt. Durch die Rotation des Laufrades 340B wird das Fluid in radialer Richtung durch eine Fluidausströmöffnung 346B ausgeströmt.

Das erste Laufradgehäuse 342A und das zweite Laufradgehäuse 342B sind mittels eines Trennelements 348 voneinander getrennt ausgebildet. Beispielsweise ist das Trennelement 348 radial außenliegend an der Ausbuchtung 152 der I<onturwand 150 angeordnet und die Ausbuchtung 152 weist hierfür ausgebildete Halterungen auf.

Das erste Laufrad 340A kann durch gezieltes Ansteuern des ersten Stators 210-1 durch die elektrische Steuereinheit 220 (nicht gezeigt) betrieben werden. Das zweite Laufrad 340B kann unabhängig von dem ersten Laufrad 340A durch gezieltes Ansteuern des zweiten Stators 210-2 betrieben werden. Hierbei umfassen die Rotoren 314A, 314B eine gemeinsame Rotorachse 312, bezüglicher welcher sowohl der erste Stator 210-1 und der zweite Stator 210-2, als auch das erste Laufrad 340A und das zweite Laufrad 340B rotationssymmetrisch angeordnet sind.

Somit können in einem kompakten Gehäuse zwei verschieden Fluidpumpen angeordnet und betrieben werden. Dadurch ergibt sich der zusätzliche Vorteil, dass zwei unterschiedliche Fluidkreisläufe getrennt voneinander in der Vorrichtung 100 gefördert werden können. Durch die Trennung des Stators 210 in einen ersten Stator 210-1 und einen zweiten Stator 210-2, können die beiden Pumpen mit unterschiedlicher und voneinander abweichender Drehzahl gesteuert werden. Somit ergibt sich ein hohes Maß an Flexibilität und es ist möglich unterschiedliche Betriebsmodi in getrennten Fluidkreisläufen zu verfolgen, ohne irgendwelche Abhängigkeiten oder Einflüsse zwischen den Fluidkreisläufen zu berücksichtigen. Im Unterschied zur Ausführungsform der Figur 2B benötigt das Fluidhandhabungselement 110 dieser Ausführungsform deutlich weniger axialen Bauraum. Dies ist der Ausbildung als Außenläufer geschuldet. Die Statoren sind innerhalb der Rotoren angeordnet und die zugeordneten Laufräder befinden sich zudem radial außerhalb der Rotoren. Dadurch vergrößert sich der Außendurchmesser dieser Ausführungsform eines Fluidhandhabungselements deutlich, wodurch insgesamt eine höhere Laufruhe und eine größere Toleranz in Bezug auf Druckwellen erreicht werden kann. Der innenliegende Stator hingegen kann kleiner ausgebildet werden, was die Herstellungskosten reduziert. In einer weiteren Ausführungsform wäre es ebenfalls denkbar, die Außenläufer-Anordnung mit nur einem Stator und nur einem zugeordneten Rotor zu realisieren.

Um die Funktion der Vorrichtung 100 zu verbessern, kann zwischen dem ersten Rotor 314A und der fluidundurchlässigen I<onturwand 150 ein Isolator (nicht gezeigt) angeordnet sein. Entsprechend kann zwischen dem zweiten Rotor 314B und der fluidundurchlässigen I<onturwand 150 ein Isolator (nicht gezeigt) angeordnet sein.

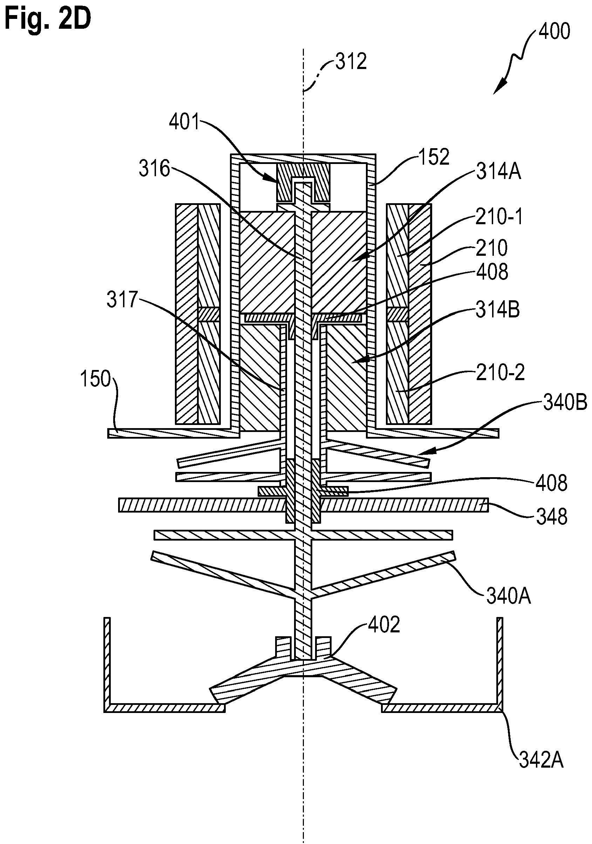

Die Fig. 2D zeigt einen detaillierten Längsschnitt eines Fluidhandhabungselements der erfindungsgemäßen Vorrichtung mit einer Pumpeneinrichtung 400. Auch diese Ausführungsform umfasst den ersten Gehäuseabschnitt (nicht gezeigt) und den zweiten Gehäuseabschnitt (nicht gezeigt), wobei der erste Gehäuseabschnitt 200 und der zweite Gehäuseabschnitt 300 durch die fluidisch undurchlässige I<onturwand 150 aneinander angrenzend ausgebildet sind. Die I<onturwand 150 weist auf der zum ersten Gehäuseabschnitt 200 orientierten Seite eine Ausbuchtungen 152 auf. Die Ausbuchtung 152 ist von einem Mittel 210 zum Erzeugen eines steuerbar veränderlichen Magnetfelds in Form eines Stators umgeben. Der Stator umfasst einen ersten Stator 210-1 und einen zweiten Stator 210-2. Der erste Stator 210-1 und der zweite Stator 210-2 sind in Richtung der Rotorachse 312 koaxial aneinander angrenzend angeordnet.

Innerhalb des zweiten Gehäuseabschnitts 300, welcher fluidführend ausgebildet ist, ist das Mittel, welches durch das erzeugte Magnetfeld bewegbar ist, angeordnet. Das Mittel, welches durch das erzeugte Magnetfeld bewegbar ist, umfasst ein erstes Mittel, welches durch das erzeugte Magnetfeld bewegbar ist, und ein zweites Mittel, welches durch das erzeugte Magnetfeld bewegbar ist. Dem ersten Mittel, welches durch das erzeugte Magnetfeld bewegbar ist, ist hierbei dem Magnetfeld des ersten Stators 210-1 zugeordnet und das zweite Mittel, welches durch das erzeugte Magnetfeld bewegbar ist, ist dem Magnetfeld des zweiten Stators 210-2 zugeordnet.

Weiter umfasst das erste Mittel, welches durch das erzeugte Magnetfeld des ersten Stators 210-1 bewegbar ist, einen erster Rotor 314A mit einem zugeordneten Magnet. Entsprechend umfasst das zweite Mittel, welches durch das erzeugte Magnetfeld des zweiten Stators 210-2 bewegbar ist, einen zweiten Rotor 314B mit einem zugeordneten Magnet.

Beide Rotoren 314A, 314B sind im zweiten Gehäuseabschnitt 300 präzise in die Ausbuchtung 152 der I<onturwand 150 eingeführt. Der erste Rotor 314A ist hierbei dem ersten Stator 210-1 zugeordnet. Der erste Rotor 314A wird durch den ersten Stator 210-1 in Rotation versetzt, wodurch das erste Mittel, welches durch das Magnetfeld des ersten Stators 210-1 bewegbar ist, in Rotation versetzt werden kann und somit durch den ersten Stator 210-1 steuerbar ist.

Der zweite Rotor 314B ist dem zweiten Stator 210-2 zugeordnet. Der zweite Rotor 314B wird durch den zweiten Stator 210-2 in Rotation versetzt, wodurch das zweite Mittel, welches durch das Magnetfeld des zweiten Stators 210-2 bewegbar ist, in Rotation versetzt werden kann und somit durch den zweiten Stator 210-2 steuerbar ist.

Über eine Rotorwelle 316 ist der erste Rotor 314A mit einem ersten Laufrad 340A verbunden, welches durch Rotation als Pumpe zum Fördern des Fluids genutzt werden kann.

Das erste Laufrad 340A befindet sich innerhalb eines Laufradgehäuses 342A. Fluid wird also durch eine Fluideinströmungsöffnung 344A (nicht gezeigt) in das Laufradgehäuse 342A eingeströmt und durch die Rotation des Laufrades 340A in radialer Richtung durch eine Fluidausströmöffnung 346A (nicht gezeigt) ausgeströmt. Die Rotorwelle 316 wird innerhalb der zylinderförmigen Ausbuchtung 152 in einem ersten Rotorlager 401 und in dem Laufradgehäuses 342B in einem zweiten Rotorlager 402 geführt.

Der zweite Rotor 314B ist über eine Rotorhohlwelle 317 mit einem zweiten Laufrad 340B verbunden, welches durch Rotation als Pumpe zum Fördern des Fluids genutzt werden kann. Das zweite Laufrad 340B befindet sich innerhalb eines Laufradgehäuses 342B (nicht gezeigt), wobei Fluid über eine seitlich angeordnete Fluideinströmungsöffnung 344B (nicht gezeigt) in das Laufradgehäuse eingeströmt wird. Durch die Rotation des Laufrades 340B wird das Fluid in radialer Richtung durch eine Fluidausströmöffnung ausgeströmt.

Das erste Laufradgehäuse 342A und das zweite Laufradgehäuse 342B sind mittels eines Trennelements 348 voneinander getrennt ausgebildet. Die Rotorwelle 316, welche dem ersten Rotor 314A und dem ersten Stator 210-1 zugeordnet ist, erstreckt sich durch die Rotorhohlwelle 317 und durch das zweite Laufradgehäuse 342B hindurch. Das Trennelement 348 umfasst ein Lager 408, um die Rotorwelle 316 mit möglichst geringer Reibung zu führen. Ein weiteres Lager 408 befindet sich zwischen dem ersten Rotor 314 A und dem zweiten Rotor 314B. Das Lager 408 dichtet hierbei die Rotorwelle 316 gegenüber der Rotorhohlwelle 317 bei minimierter Reibung ab.

Das erste Laufrad 340A kann durch gezieltes Ansteuern des ersten Stators 210-1 durch die elektrische Steuereinheit 220 (nicht gezeigt) betrieben werden. Das zweite Laufrad 340B kann unabhängig von dem ersten Laufrad 340A durch gezieltes Ansteuern des zweiten Stators 210-2 betrieben werden. Hierbei umfassen die Rotoren 314A, 314B eine gemeinsame Rotorachse 312, bezüglicher welcher sowohl das erste Mittel, welches durch das erzeugte Magnetfeld des ersten Stators 210-1 bewegbar ist, als auch das zweite Mittel, welches durch das erzeugte Magnetfeld des zweiten Stators 210-2 bewegbar ist, rotationssymmetrische angeordnet sind. Die Laufräder 340A, 340B könnten jedoch auch in entgegengesetzten Richtungen verwendet werden.

In der konkreten Ausführungsform sind das erste Laufrad 340A und das zweite Laufrad 340B zueinander gegenläufig angeordnet, wodurch sich axiale Kräfte, die durch den Betrieb der Laufräder entstehen, gegenseitig ausgleichen. Zusätzlich ist die Geometrie des ersten Laufrades 340A von dem zweiten Laufrad 340B verschieden. Das erste Laufrad 340A hat sowohl eine größere Flügellänge als auch ein größere Flügelhöhe. Wenn die Drehzahlen des ersten Laufrades 340A und des zweiten Laufrades 340B identisch sind, so ist beim ersten Laufrad 340A von einem größeren Volumenstrom auszugehen.

Somit können in einem kompakten Gehäuse zwei verschieden Fluidpumpen angeordnet und betrieben werden. Dadurch ergibt sich der zusätzliche Vorteil, dass zwei unterschiedliche Fluidkreisläufe getrennt voneinander in der Vorrichtung 100 gefördert werden können. Durch die Trennung des Stators 210 in einen ersten Stator 210-1 und einen zweiten Stator 210-2, können die beiden Pumpen mit unterschiedlicher und voneinander abweichender Drehzahl gesteuert werden. Somit ergibt sich ein hohes Maß an Flexibilität und es ist möglich unterschiedliche Betriebsmodi in getrennten Fluidkreisläufen zu verfolgen, ohne irgendwelche Abhängigkeiten oder Einflüsse zwischen den Fluidkreisläufen zu berücksichtigen.

Um die Funktion der Vorrichtung 100 zu verbessern, kann zwischen dem ersten Rotor 314A und der fluidundurchlässigen I<onturwand 150 in einer radialen Richtung ein Isolator (nicht gezeigt) angeordnet sein. Entsprechend kann zwischen dem zweiten Rotor 314B und der fluidundurchlässigen I<onturwand 150 in einer radialen Richtung ein Isolator (nicht gezeigt) angeordnet sein.

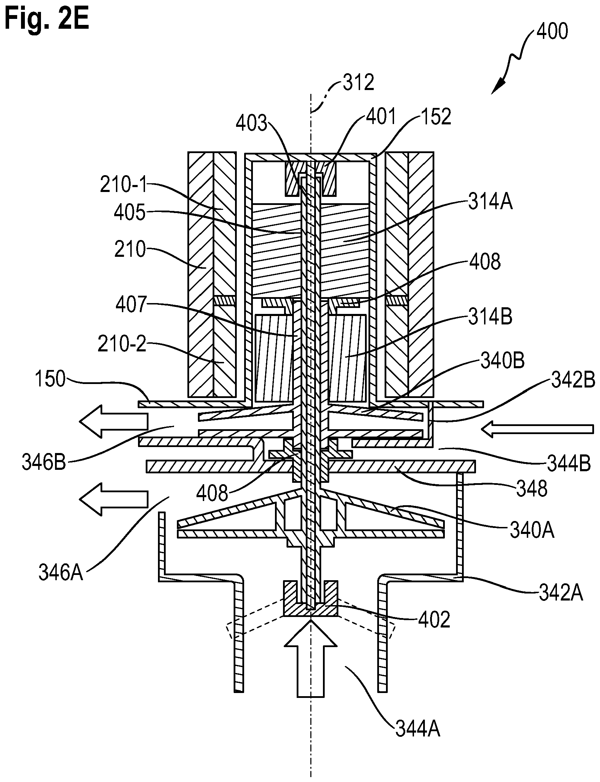

Die Fig. 2E zeigt einen detaillierten Längsschnitt eines Fluidhandhabungselements der erfindungsgemäßen Vorrichtung mit einer Pumpeneinrichtung 400 nach einer weiteren Ausführungsform. Auf eine wiederholte Beschreibung gegenüber der Fig. 2D identischer Merkmale wird verzichtet.

Durch die Pumpeneinrichtung 400 hindurch erstreckt sich eine feststehende Welle 403. Die feststehende Welle 403 erstreckt innerhalb des fluidisch durchströmten zweiten Gehäuseabschnitts 300 (nicht gezeigt) beginnend in der zylinderförmigen Ausbuchtung 152 durch den ersten Rotor 314A, den zweiten Rotor 314B, das zweite Laufrad 340 B und das erste Laufrad 340A hindurch und endet im Laufradgehäuse 342A. Die feststehende Welle 403 ist umgeben von einer ersten Hohlwelle 405, welche den ersten Rotor 314A trägt und eine Drehmomentübertragung des ersten Rotors 314A auf das erste Laufrad 340A ermöglicht. Die erste Hohlwelle 405 wird hierbei in einem ersten Rotorlager 401 in der zylinderförmigen Ausbuchtung 152 und in einem zweiten Rotorlager 402 in dem Laufradgehäuse 342A drehbar gelagert.

Zusätzlich ist die erste Hohlwelle 405 von einer zweiten Hohlwelle 407 umgeben. Die zweite Hohlwelle 407 trägt den zweiten Rotor 314B und ist dazu ausgebildet ein Drehmoment des zweiten Rotors 314B auf das zweite Laufrad 340B zu übertragen. Die zweite Hohlwelle 407 wird in einem ersten Lager 408 gelagert, welche zwischen dem ersten Rotor 314A und dem zweiten Rotor 314B angeordnet ist. Somit hat das Lager 408 eine Doppelfunktion. Die erste Funktion besteht im Lagern der zweiten Hohlwelle 407, die zweite Funktion besteht in der Abdichtung des ersten Rotors 314A gegenüber dem zweiten Rotor 314B. Zusätzlich wird die zweite Hohlwelle 407 mittels eines zweiten Lagers 408 gelagert welche in einem Trennelement 348 angeordnet ist und das Laufradgehäuse 342B gegenüber dem Laufradgehäuse 342A abtrennt.

Das erste Laufrad 340A befindet sich innerhalb des Laufradgehäuses 342A. Fluid wird also durch eine Fluideinströmungsöffnung 344A von unten in das Laufradgehäuse 342A eingeströmt und durch die Rotation des Laufrades 340A in radialer Richtung durch eine Fluidausströmöffnung 346A ausgeströmt.

Das zweite Laufrad 340B befindet sich innerhalb des Laufradgehäuses 342B, wobei Fluid über die seitlich angeordnete Fluideinströmungsöffnung 344B in das Laufradgehäuse 342B eingeströmt wird. Durch die Rotation des Laufrades 340B wird das Fluid in radialer Richtung durch die Fluidausströmöffnung 346B ausgeströmt.

In der Ausführungsform sind das erste Laufrad 340A und das zweite Laufrad 340B zueinander gleichläufig angeordnet. Zusätzlich ist die Geometrie des ersten Laufrades 340A von dem zweiten Laufrad 340B verschieden. Das erste Laufrad 340A hat sowohl eine größere Flügellänge als auch ein größere Flügelhöhe. Wenn die Drehzahlen des ersten Laufrades 340A und des zweiten Laufrades 340B identisch sind, so ist beim ersten Laufrad 340A von einem größeren Volumenstrom auszugehen.

Auch hier kann das erste Laufrad 340A durch gezieltes Ansteuern des ersten Stators 210-1 durch die elektrische Steuereinheit 220 (nicht gezeigt) betrieben werden. Das zweite Laufrad 340B kann unabhängig von dem ersten Laufrad 340A durch gezieltes Ansteuern des zweiten Stators 210-2 betrieben werden. Hierbei umfassen die Rotoren 314A, 314B eine gemeinsame Rotorachse 312, bezüglicher welcher sowohl das erste Mittel, welches durch das erzeugte Magnetfeld des ersten Stators 210-1 bewegbar ist, als auch das zweite Mittel, welches durch das erzeugte Magnetfeld des zweiten Stators 210-2 bewegbar ist, rotationssymmetrische angeordnet sind.

Es bestehen auch in dieser Ausführungsform die Vorteile, nach welchen in einem kompakten Gehäuse zwei verschieden Fluidpumpen angeordnet und betrieben werden können. Dadurch ergibt sich der weitere Vorteil, dass zwei unterschiedliche Fluidkreisläufe getrennt voneinander in der Vorrichtung 100 gefördert werden können. Durch die Trennung des Stators 210 in einen ersten Stator 210-1 und einen zweiten Stator 210-2, können die beiden Pumpen mit unterschiedlicher und voneinander abweichender Drehzahl gesteuert werden. Somit ergibt sich ein hohes Maß an Flexibilität und es ist möglich unterschiedliche Betriebsmodi in getrennten Fluidkreisläufen zu verfolgen, ohne irgendwelche Abhängigkeiten oder Einflüsse zwischen den Fluidl<reisläufen zu berücksichtigen.

Auch in dieser Ausführungsform kann zwischen dem ersten Rotor 314A und der fluidundurchlässigen I<onturwand 150 in einer radialen Richtung ein Isolator (nicht gezeigt) angeordnet sein. Entsprechend kann zwischen dem zweiten Rotor 314B und der fluidundurchlässigen I<onturwand 150 in einer radialen Richtung ein Isolator (nicht gezeigt) angeordnet sein.

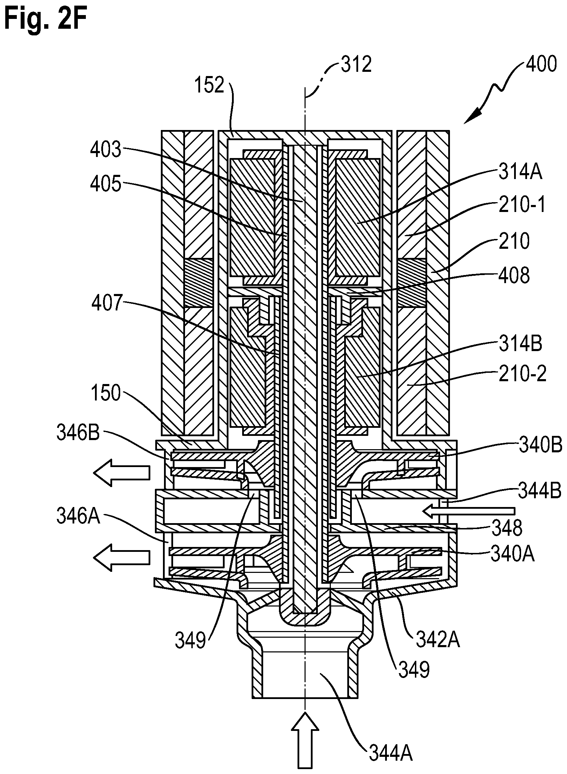

Die Fig. 2F zeigt einen detaillierten Längsschnitt eines Fluidhandhabungselements der erfindungsgemäßen Vorrichtung mit einer Pumpeneinrichtung 400 nach einer weiteren Ausführungsform. Auf eine wiederholte Beschreibung gegenüber den Figuren 2D und 2E identischer Merkmale wird verzichtet.

Auch diese Ausführungsform umfasst die feststehende Welle 403, die sich innerhalb des fluidisch durchströmten zweiten Gehäuseabschnitts 300 (nicht gezeigt) beginnend in der zylinderförmigen Ausbuchtung 152 durch den ersten Rotor 314A, den zweiten Rotor 314B, das zweite Laufrad 340 B und das erste Laufrad 340A hindurch erstreckt und im Laufradgehäuse 342A endet. Die feststehende Welle 403 ist umgeben von einer ersten Hohlwelle 405, welche den ersten Rotor 314A trägt und eine Drehmomentübertragung des ersten Rotors 314A auf das erste Laufrad 340A ermöglicht.

Zusätzlich ist die erste Hohlwelle 405 von der zweiten Hohlwelle 407 umgeben. Die zweite Hohlwelle 407 trägt den zweiten Rotor 314B und ist dazu ausgebildet ein Drehmoment des zweiten Rotors 314B auf das zweite Laufrad 340B zu übertragen. Die zweite Hohlwelle 407 wird in einem Lager 408 gelagert, welche zwischen dem ersten Rotor 314A und dem zweiten Rotor 314B angeordnet ist. Somit hat dieses Lager 408 die Doppelfunktion einer Abdichtung des ersten Rotors 314A gegenüber dem zweiten Rotor 314B und im Lagern der zweiten Hohlwelle 407.

Das erste Laufrad 340A befindet sich innerhalb des Laufradgehäuses 342A. Fluid wird durch eine Fluideinströmungsöffnung 344A von unten in das Laufradgehäuse 342A eingeströmt und durch die Rotation des Laufrades 340A in radialer Richtung durch eine Fluidausströmöffnung 346A ausgeströmt.

Das zweite Laufrad 340B befindet sich innerhalb des Laufradgehäuses 342B, wobei Fluid über die seitlich angeordnete Fluideinströmungsöffnung 344B in das Laufradgehäuse 342B eingeströmt wird. Durch die Rotation des Laufrades 340B wird das Fluid in radialer Richtung durch die Fluidausströmöffnung 346B ausgeströmt, welche hier vereinfacht dargestellt ist. Beispielsweise kann die Fluidausströmöffnung 346B als Spiralgehäuse mit wachsendem Querschnitt vorgesehen sein, um kinetische Energie in Druck umzuwandeln.

Ein Trennelement 348 ist zum Abtrennen des ersten und des zweiten Fluidkreislaufs zwischen dem Laufradgehäuse 342B und dem Laufradgehäuse 342A angeordnet.

Das Trennelement 348 umfasst die seitlich angeordnete Fluideinströmungsöffnung 344B, durch welche Fluid in das Laufradgehäuse 342B eingeströmt wird. Hierbei wird das Fluid innerhalb des Trennelements 348 umgeleitet und über eine axiale Öffnung 349 von unten in das Laufradgehäuse 342B eingeströmt. Das Einströmen von unten ist deutlich effizienter für die Leistung des Laufrades 340B, wodurch die Pumpeneinrichtung 400 und damit die Vorrichtung 100 insgesamt verbessert werden kann. Die axiale Öffnung 349 verläuft radial innenliegend, wodurch das Fluid noch besser von unten in das Laufradgehäuse 342B eingeströmt und wiederrum von dem Laufrad 340B radial nach außen gefördert werden kann.

In dieser Ausführungsform sind das erste Laufrad 340A und das zweite Laufrad 340B zueinander gleichläufig angeordnet. Eine gegenläufige Anordnung ist ebenfalls denkbar. Die Geometrien des ersten Laufrades 340A und des zweiten Laufrades 340B sind identisch.

Auch hier kann das erste Laufrad 340A durch gezieltes Ansteuern des ersten Stators 210-1 durch die elektrische Steuereinheit 220 (nicht gezeigt) betrieben werden. Das zweite Laufrad 340B kann unabhängig von dem ersten Laufrad 340A durch gezieltes Ansteuern des zweiten Stators 210-2 betrieben werden. Hierbei umfassen die Rotoren 314A, 314B die gemeinsame Rotorachse 312, bezüglicher welcher sowohl das erste Mittel, welches durch das erzeugte Magnetfeld des ersten Stators 210-1 bewegbar ist, als auch das zweite Mittel, welches durch das erzeugte Magnetfeld des zweiten Stators 210-2 bewegbar ist, rotationssymmetrische angeordnet sind.

Es bestehen auch in dieser Ausführungsform die Vorteile, wonach in einem kompakten Gehäuse zwei verschieden Fluidpumpen angeordnet und betrieben werden können.

Dadurch ergibt sich der weitere Vorteil, dass zwei unterschiedliche Fluidkreisläufe getrennt voneinander in der Vorrichtung 100 gefördert werden können. Durch die Trennung des Stators 210 in einen ersten Stator 210-1 und einen zweiten Stator 210-2, können die beiden Pumpen mit unterschiedlicher und voneinander abweichender Drehzahl gesteuert werden. Somit ergibt sich ein hohes Maß an Flexibilität und es ist möglich unterschiedliche Betriebsmodi in getrennten Fluidkreisläufen zu verfolgen, ohne irgendwelche Abhängigkeiten oder Einflüsse zwischen den Fluidkreisläufen zu berücksichtigen. Auch in dieser Ausführungsform kann zwischen dem ersten Rotor 314A und der fluidundurchlässigen I<onturwand 150 in einer radialen Richtung ein Isolator (nicht gezeigt) angeordnet sein. Entsprechend kann zwischen dem zweiten Rotor 314B und der fluidundurchlässigen I<onturwand 150 in einer radialen Richtung ein Isolator (nicht gezeigt) angeordnet sein.

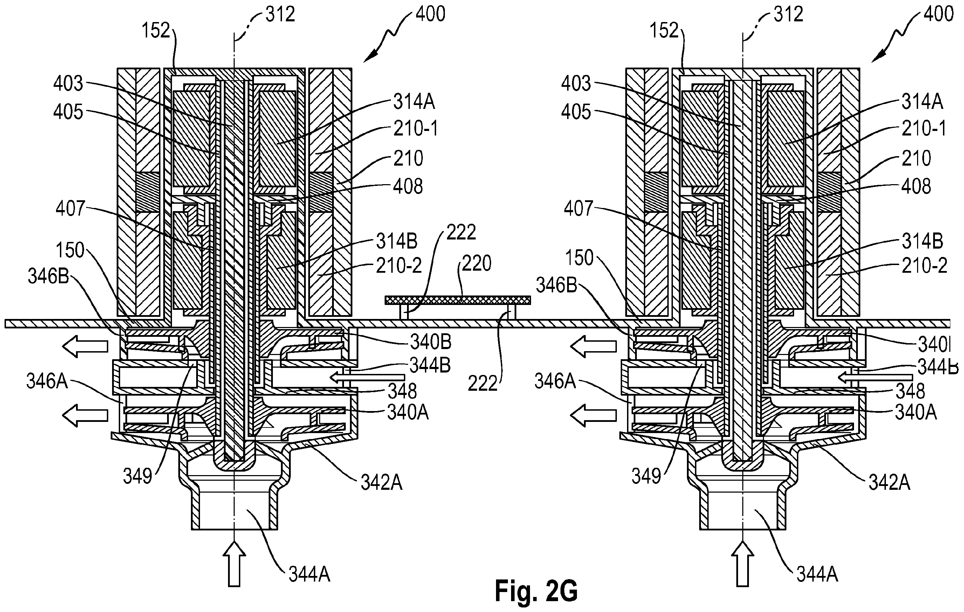

Die Fig. 2G zeigt einen detaillierten Längsschnitt der erfindungsgemäßen Vorrichtung nach einer weiteren Ausführungsform. Die Vorrichtung 100 umfasst ein erstes Fluidhandhabungselement in Form einer Pumpeneinrichtung 400 und ein zweites Fluidhandhabungselement in Form einer Pumpeneinrichtung 400. Die fluidisch undurchlässige I<onturwand 150 ist kontinuierlich zwischen dem ersten Fluidhandhabungselement und dem zweiten Fluidhandhabungselement ausgebildet. An einem flächigen Abschnitt der fluidisch undurchlässigen I<onturwand 150 ist eine elektrische Steuereinheit 220 angeordnet. Die elektrische Steuereinheit 220 ist innerhalb des ersten Gehäuseabschnitts 200 angrenzend an der fluidisch undurchlässigen I<onturwand 150 angeordnet, um eine optimale Kühlleistung an der elektrischen Steuereinheit 220 zu erreichen. Die Kühlleistung an der elektrischen Steuereinheit 220 ist umso höher, je mehr Wärme von der elektrischen Steuereinheit 200 abtransportiert werden kann. Somit besteht ein Bedürfnis einen möglichst großen Teil der elektrischen Steuereinheit 220 so nah wie möglich an einen Fluidstrom anzunähern, welcher sich unmittelbar unterhalb der I<onturwand 150 in dem zweiten Gehäuseabschnitt befindet. Die elektrische Steuereinheit 220 ist über ein Befestigungselement 222 an der I<onturwand 150 befestigt. Beispielsweise kann das Befestigungselement aus einem besonders leitfähigen Material hergestellt sein. Alternativ kann die elektrische Steuereinheit 220 auch unmittelbar an die I<onturwand 150, ohne den Einsatz eines Befestigungselements 222 angebracht werden. Die Fluidhandhabungselemente sind nicht auf die konkrete Ausführungsform in Form von Pumpeneinrichtungen 400 beschränkt. Alternativ oder zusätzlich können die Fluidhandhabungselemente auch als Ventile, Drehschieber oder Expansionsventile in jeder denkbaren Kombination angeordnet werden. Hierbei kann die Vorrichtung auch mehr als zwei Fluidhandhabungselemente umfassen. Beispielsweise kann die Vorrichtung drei Fluidhandhabungselemente aufweisen, wobei zwei Fluidhandhabungselemente als Pumpeneinrichtung ausgebildet und ein Fluidhandhabungselement als Drehschieber oder als Ventileinrichtung ausgebildet ist. In diesem Fall würde die fluidisch undurchlässige I<onturwand 150 kontinuierlich zwischen dem ersten Fluidhandhabungselement, dem zweiten Fluidhandhabungselement und dem dritten Fluidhandhabungselement ausgebildet sein.

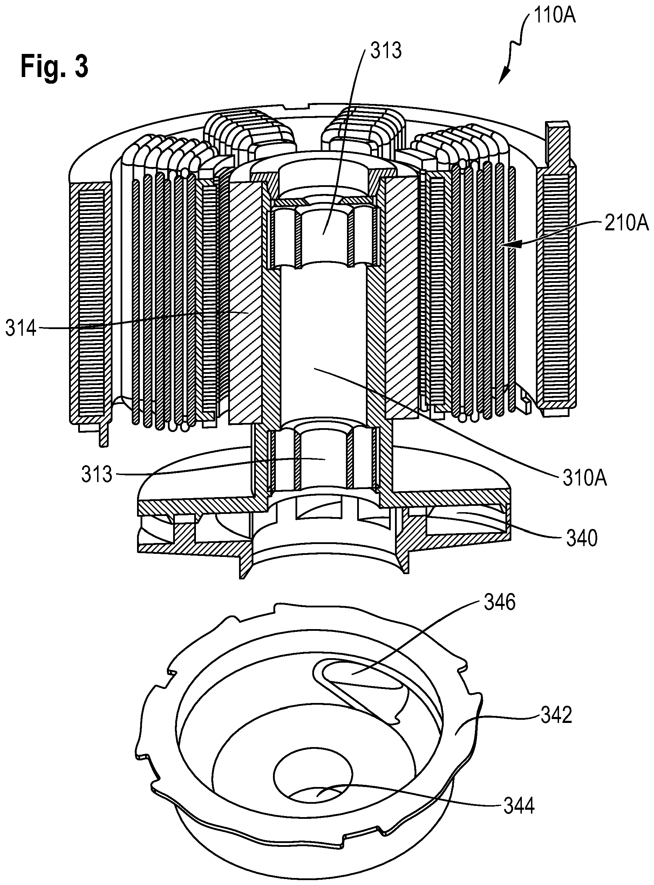

Die Fig. 3 zeigt eine Längsschnittansicht eines Fluidhandhabungselements 110A der erfindungsgemäßen Vorrichtung 100. In dem ersten Gehäuseabschnitt (nicht gezeigt) befindet sich das Mittel 210A zum Erzeugen eines steuerbar veränderlichen Magnetfelds in Form eines Stators. Getrennt von der I<onturwand (nicht gezeigt) und somit im angrenzenden zweiten Gehäuseabschnitt 300 (nicht gezeigt) ist das Mittel 310A, welches durch das Magnetfeld bewegbar ausgebildet ist, in Form eines Rotors 314 angeordnet.

Der Rotor 314 ist in radialer Richtung von einem Isolator (nicht gezeigt) umgeben. Der Rotor 314 umfasst zusätzlich zwei Lagerstellen 313, welche zur Aufnahme Rotorachse ausgebildet sind. An einem unteren Abschnitt des Rotors 314 befindet sich das Laufrad 340 zum radialen Ausströmen von Fluid.

Unterhalb des Laufrades 340 befindet sich das Laufradgehäuse 342, in einer perspektivischen Darstellung. Das Laufradgehäuse 342 zeigt die Fluideinströmöffnung 344, welche mittig in einem Bodenstück des Laufradgehäuses 342 angeordnet ist. Zusätzlich umfasst das Laufradgehäuse 342 eine Fluidausströmöffnung 346, welche in einer seitlichen Wandung angeordnet ist. Fluid wird durch die Fluideinströmungsöffnung 344 in das Laufradgehäuses 342 eingeströmt und durch die Rotation des Laufrades 340 in radialer Richtung durch die Fluidausströmöffnung 346 ausgeströmt. Hierdurch entsteht die Pumpwirkung des Fluidhandhabungselements 110A.

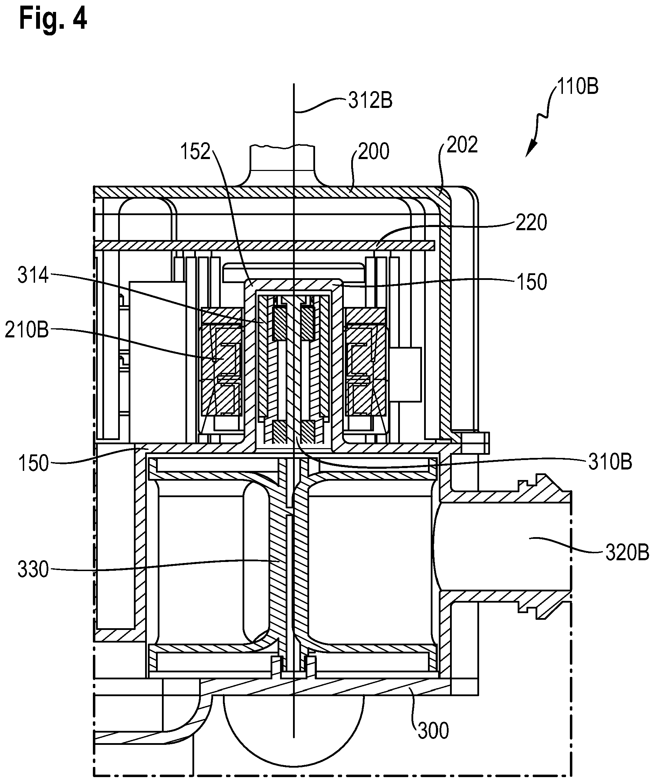

Die Fig. 4 zeigt einen detaillierten Längsschnitt eines weiteren Fluidhandhabungselements 110B der erfindungsgemäßen Vorrichtung 100. Die Vorrichtung 100 umfasst den ersten Gehäuseabschnitt 200 und den zweiten Gehäuseabschnitt 300, wobei der erste Gehäuseabschnitt 200 und der zweite Gehäuseabschnitt 300 durch die fluidisch undurchlässige I<onturwand 150 aneinander angrenzend ausgebildet sind. Die I<onturwand 150 ist gleichzeitig die Außenwand des zweiten Gehäuseabschnitts 300, wodurch die Außenwand identisch ist mit der zum ersten Gehäuseabschnitt 200 orientierten Seite des zweiten Gehäuseabschnitts 300. Die I<onturwand 150 weist auf der zum ersten Gehäuseabschnitt 200 orientierten Seite eine Ausbuchtung 152 auf. Die Ausbuchtung 152 ist von einem Mittel 210B zum Erzeugen eines steuerbar veränderlichen Magnetfelds in Form eines Stators umgeben und die Ausbuchtung 152 ragt vollständig durch den Innenraum des Stators hindurch, wodurch dieser nahezu vollständig ausgefüllt ist.

Zusätzlich befindet sich innerhalb des ersten Gehäuseabschnitts 200 die elektrische Steuereinheit 220 zum Steuern der Vorrichtung 100. Sie ist oberhalb des Mittels 210B zum Erzeugen eines steuerbar veränderlichen Magnetfelds in Form eines Stators angeordnet.

Das Mittel 210B zum Erzeugen eines steuerbar veränderlichen Magnetfelds in Form eines Stators und die elektrische Steuereinheit 220 zum Steuern der Vorrichtung 100 sind von einem ersten Abdeckelement 202 verschlossen und gegen äußere Einflüsse wie Schmutz, Feuchtigkeit oder mechanische Einwirkungen geschützt.

Innerhalb des zweiten Gehäuseabschnitts 300, welcher fluidführend ausgebildet ist, ist ein Mittel 310B welches durch das erzeugte Magnetfeld bewegbar ist, angeordnet. Das Mittel 310B welches durch das erzeugte Magnetfeld bewegbar ist, weist einen Rotor 314 mit einem zugeordneten Magnet auf. Der Rotor 314 ist exakt in die Ausbuchtung 152 der I<onturwand 150 eingeführt, wodurch die exakte Ausrichtung zwischen Rotor 314 und Stator gegeben ist. Der Rotor 314 wird durch den Stator in Rotation versetzt, wodurch das das Mittel 310B, welches durch das Magnetfeld bewegbar in Rotation versetzt werden kann und somit durch den Stator steuerbar ist. Um die Funktion der Rotor-Stator- Anordnung zu verbessern, wird zwischen Rotor 314 und der Ausbuchtung 152 in einer radialen Richtung ein Isolator (nicht gezeigt) angeordnet. Unterhalb des Rotors 314 ist ein Schaltelement 330 angeordnet. Das Schaltelement kann als Drehschieber ausgebildet werden kann, wodurch in Abhängigkeit der konkreten Position des Drehschiebers Fluid umgeleitet werden kann. Das Umleiten von Fluid ermöglicht eine Vielzahl von Anschlüssen und Schaltmodi innerhalb der Vorrichtung 100. Dies macht die Vorrichtung 100 bzw. das Fluidhandhabungselement 110B an verschiedene Fahrzeuge und die entsprechende gewünschte Funktion adaptierbar. Seitlich von dem Schaltelement 330 ist ein Anschluss 320B angeordnet, welcher zum Ein- und/ oder Ausströmen von Fluid ausgebildet ist. Das Fluidhandhabungselement 110B umfasst eine Rotorachse 312B, bezüglicher welcher das Mittel 310B, welches durch das Magnetfeld bewegbar ist, der Rotor 314 und das Schaltelement 330 rotationssymmetrisch angeordnet sind.

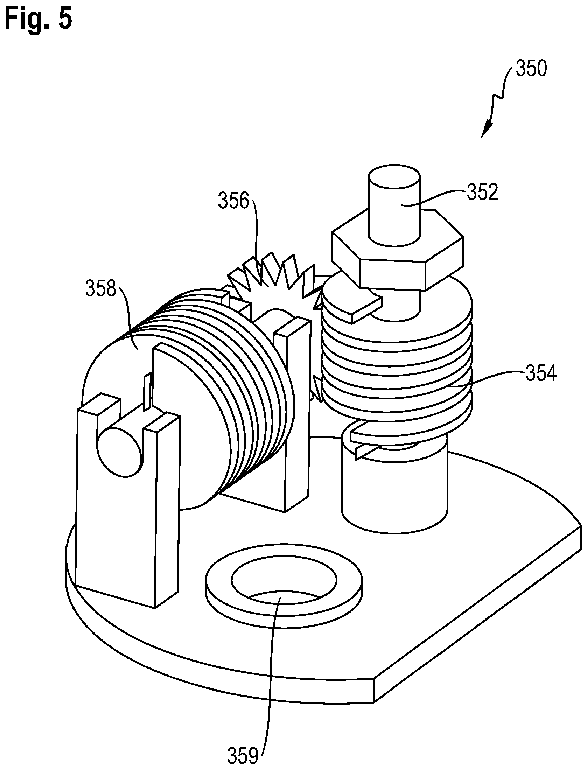

Die Fig. 5 zeigt eine schematische Darstellung eines nasslaufenden Getriebes 350 der erfindungsgemäßen Vorrichtung 100. Das nasslaufende Getriebe 350 umfasst eine Antriebselement 352, welches das Drehmoment des Rotors aufnimmt. Durch das Drehmoment wird über das Antriebselement 352 eine Antriebsschnecke 354 in Rotation versetzt. Ein seitlich angeordnetes Zahnrad 356 koppelt eine zugeordnete Getriebestufe 358. Unmittelbar an die Getriebestufe 358 befindet sich eine Drehschieberöffnung 359. Durch die Drehschieberöffnung 359 ragt im montierten Zustand ein Abtriebselement des Drehschiebers (nicht gezeigt) hindurch, und greift direkt in die Getriebestufe 358 des nasslaufenden Getriebes 350 ein. Dadurch wird die exakte Position des als Drehschieber ausgebildeten Schaltelements 330 steuerbar. Durch die vorherrschende Selbsthemmung des nasslaufenden Getriebes 350, ist keine Kraft (magnetisch oder elektrisch) notwendig, um den Drehschieber in Position zu halten. Dies bringt beispielsweise im proportionalen Betrieb erhebliche Vorteile mit sich. Mit diesem nasslaufenden Getriebe 350 können beliebig viele Getriebestufen 358 gekoppelt werden um letztlich die Position des gekoppelten Schaltelements 330 ausgehend von dem durch die elektrische Steuereinheit 220 angesteuerten Stators zu bestimmen. Das nasslaufende Getriebe 350 ist direkt im Fluid und somit in dem zweiten Gehäuseabschnitt 300 angeordnet. Hierdurch werden keine dynamischen Dichtungen benötigt. Die notwendige Schmierung des nasslaufenden Getriebes 350 erfolgt direkt über das Kühlfluid und die entstehende Verlustwärme durch Reibung wird direkt in das Kühlfluid abgegeben.

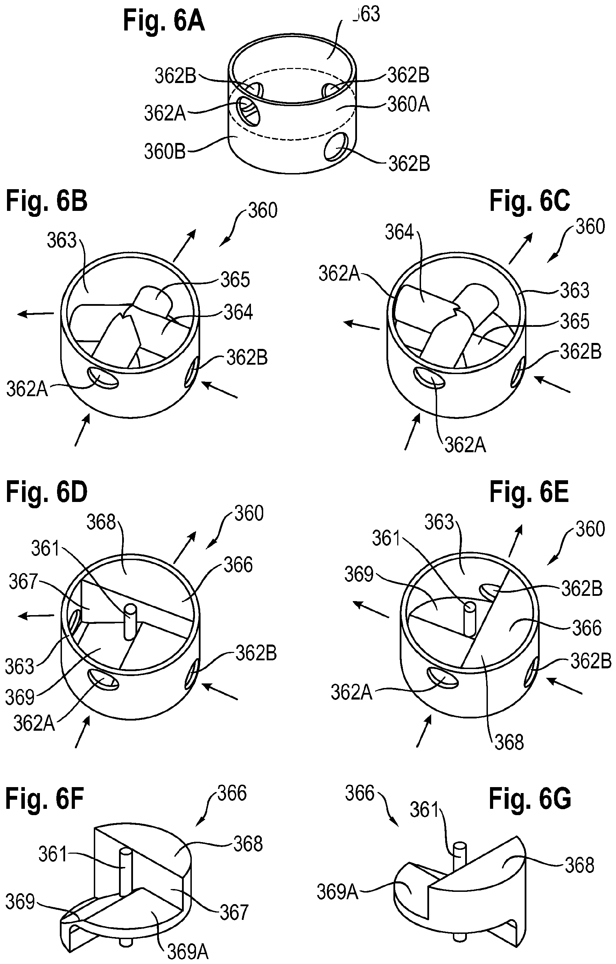

Die Figuren 6A bis 6G zeigen mehrere schematische Darstellungen einer doppelten Drehschieberanordnung 360 der erfindungsgemäßen Vorrichtung 100. Einfache Drehschieberanordnungen weisen sogenannte 2 x 90° Umlenkungen auf. Diese 2 x 90° Umlenkungen weisen den Nachteil auf, dass Kanäle nicht über zwei verschiedene Ebenen hinweg miteinander verbunden werden können. Die erfindungsgemäße doppelte Drehschieberanordnung 360 umfasst eine erste Ebene 360A und eine zweiten Ebene 360B. Der Vorteil dieser doppelten Drehschieberanordnung 360 ist, dass mit nur einer Drehschieberanordnung zwei Drehschieber gleichzeitig betrieben werden. Man spart sich somit ein weiteres Fluidhandhabungselement 110B bzw. einen zusätzlichen Drehschieber, welcher mit einer zusätzlichen Stator-Rotor-Anordnung betrieben werden muss.

Die Figur 6A zeigt eine schematische Darstellung einer Drehschieberwandung 363 einer doppelten Drehschieberanordnung 360. Die Drehschieberwandung 363 ist Teil des Gehäuses, welches den Drehschieber - in dieser Ausführungsform mit oberem und unterem I<analverbindungselement 364, 365 aufnimmt. Die Drehschieberwandung 363 weist mehrere Ein- und Ausströmöffnungen 362A, 362B auf, welche entweder in der ersten Ebene 360A oder in der zweiten Ebene 360B angeordnet sind. Hierbei befindet sich auf der oberen ersten Ebene 360A lediglich eine obere Ein- und Ausströmöffnung 362A, während sich auf der unteren zweiten Ebene 360B drei untere Ein- und Ausströmöffnung 362B befinden. Die Ein- und Ausströmöffnungen 362A, 362B sind um den gesamten Umfang der Drehschieberwandung 363 herum mit jeweils 90° Abstand zueinander angeordnet.

Die Figur 6B zeigt eine schematische Darstellung einer doppelten Drehschieberanordnung 360. Die Drehschieberwandung 363 weist die obere ersten Ebene 360A mit einer oberen Ein- und Ausströmöffnung 362A und die untere zweite Ebene 360B mit insgesamt drei unteren Ein- und Ausströmöffnungen 362B auf. Innerhalb der Drehschieberwandung 363 befindet sich ein oberes I<analverbindungselement 364 und ein unteres I<analverbindungselement 365. Die beiden I<analverbindungselemente 364, 365 sind relativ zu der Drehschieberwandung 363 verdrehbar angeordnet. Hierbei sind das obere I<analverbindungselement 364 und das untere I<analverbindungselement 365 jedoch nicht relativ zueinander verdrehbar. Sie bilden also ein gemeinsames I<analverbindungselement aus.

Das obere I<analverbindungselement 364 ist in der Draufsicht T-förmig mit insgesamt drei I<analarmen ausgebildet. Zwei der drei I<analarme liegen in der ersten Ebene 360A und einer der drei I<analarme erstreckt sich in die zweite Ebene 360B. Durch diese Anordnung lässt sich das obere I<analverbindungselement 364 relativ zu der Drehschieberwandung 363 so ausrichten, dass die obere Ein- und Ausströmöffnung 362A der ersten Ebene 360A mit einer unteren Ein- und Ausströmöffnung 362B verbunden wird. Somit kann Fluid über die obere Ein- und Ausströmöffnung 362A in die doppelte Drehschieberanordnung 360 einströmen und aus der unteren Ein- und Ausströmöffnung 362B ausströmen oder umgekehrt. Einer der drei I<analarme bleibt hierbei ungenutzt und endet ohne Ein- und Ausströmöffnung blind an der Drehschieberwandung 363.

Das untere I<analverbindungselement 365 ist wie das obere I<analverbindungselement 364 in der Draufsicht T-förmig mit insgesamt drei I<analarmen ausgebildet. Im Unterschied zu dem oberen I<analverbindungselement 364 befindet sich alle drei I<analarme in einer Ebene, der zweiten Ebene 360B. In der vorliegenden Anordnung verbinden zwei der drei I<analarme zwei untere Ein- und Ausströmöffnungen 362B in einem Winkel von 90° miteinander. Der dritte I<analarm bleibt ungenutzt und endet ohne Ein- und Ausströmöffnung blind an der Drehschieberwandung 363.

Die Figur 6C zeigt die doppelten Drehschieberanordnung 360 gemäß der Figur 6B in einer anderen Anordnung. Die Drehschieberwandung 363 weist die obere erste Ebene 360A mit der oberen Ein- und Ausströmöffnung 362A und die untere zweite Ebene 360B mit insgesamt drei unteren Ein- und Ausströmöffnungen 362B auf. Innerhalb der Drehschieberwandung 363 befindet sich ein oberes I<analverbindungselement 364 und ein unteres I<analverbindungselement 365. Das obere I<analverbindungselement 364 ist in der Draufsicht T-förmig mit drei I<analarmen ausgebildet, wobei zwei der drei I<analarme in der ersten Ebene 360A liegen und einer der drei I<analarme sich in die zweite Ebene 360B erstreckt. Das untere I<analverbindungselement 365 ist wie das obere I<analverbindungselement 364 in der Draufsicht T-förmig mit drei I<analarmen ausgebildet. Im Unterschied zu dem oberen I<analverbindungselement 364 befinden sich alle drei I<analarme in einer Ebene, der zweiten Ebene 360B.

In der vorliegenden Anordnung befinden sich die beiden I<analverbindungselemente 364, 365 im Vergleich zur Anordnung der Figur 6B in einer relativ zu der Drehschieberwandung 363 um 90° verdrehten Anordnung.

Durch diese Anordnung ist das obere I<analverbindungselement 364 relativ zu der Drehschieberwandung 363 so ausgerichtet, dass die obere Ein- und Ausströmöffnung 362A der ersten Ebene 360A mit einer anderen unteren Ein- und Ausströmöffnung 362B, diejenige Ein- und Ausströmöffnung 362B, welche der oberen Ein- und Ausströmöffnung 362A gegenüberliegt, verbunden ist. Somit kann Fluid über die obere Ein- und Ausströmöffnung 362A in die doppelte Drehschieberanordnung 360 einströmen und aus einer anderen unteren Ein- und Ausströmöffnung 362B ausströmen oder umgekehrt. Der dritte I<analarm bleibt hierbei ungenutzt und endet ohne Ein- und Ausströmöffnung blind an der Drehschieberwandung 363.

In der vorliegenden Anordnung ist das untere I<analverbindungselement 365 relativ zu der Drehschieberwandung 363 so ausgerichtet, dass zwei andere untere Ein- und Ausströmöffnungen 362B in einem Winkel von 180° miteinander verbunden werden.

Somit kann Fluid über die untere Ein- und Ausströmöffnung 362B in die doppelte Drehschieberanordnung 360 einströmen und aus einer gegenüberliegenden unteren Ein- und Ausströmöffnung 362B ausströmen oder umgekehrt. Der dritte I<analarm bleibt ungenutzt und endet ohne Ein- und Ausströmöffnung blind an der Drehschieberwandung 363.

Die Fig. 6D zeigt eine alternative Ausführungsform einer erfindungsgemäßen doppelten Drehschieberanordnung 360. Auch diese doppelte Drehschieberanordnung 360 umfasst eine erste Ebene 360A und eine zweiten Ebene 360B. Auch diese Ausführungsform kann mit nur einer Drehschieberanordnung zwei Drehschieber gleichzeitig betreiben. Man spart sich somit auch hier ein weiteres Fluidhandhabungselement 110B bzw. einen zusätzlichen Drehschieber, welcher mit einer zusätzlichen Stator-Rotor-Anordnung betrieben werden muss.

Diese doppelte Drehschieberanordnung 360 umfasst eine mit den vorausgehenden Figuren identische Drehschieberwandung 363 auf. Die Drehschieberwandung 363 weist mehrere Ein- und Ausströmöffnungen 362A, 362B auf, wobei sich auf der oberen ersten Ebene 360A lediglich eine obere Ein- und Ausströmöffnung 362A befindet, während sich auf der unteren zweiten Ebene 360B drei untere Ein- und Ausströmöffnung 362B befinden. Die Ein- und Ausströmöffnungen 362A, 362B sind um den gesamten Umfang der Drehschieberwandung 363 herum mit jeweils 90° Abstand zueinander angeordnet.

Innerhalb der Drehschieberwandung 363 befindet sich ein Stellelement 366, welches um eine Zentralachse 361 rotierbar angeordnet ist. Das Stellelement 366 trennt einen Innenraum, welcher durch die Drehschieberwandung 363 in radialer Richtung und durch zwei stirnseitige Ebenen, welche die Drehschieberwandung 363 axial begrenzen, definiert ist, in einen ersten Teilraum und einen zweiten Teilraum auf. Diese Trennung erfolgt durch mehrere Flächen, welche durch gezielte Anordnung eine identische Funktion erfüllen, wie im Fall der Ausführungsformen der Figuren 6B und 6C. Das Stellelement 366 umfasst eine Längsebene 367 welche parallel zur Zentralachse 361 angeordnet, jedoch von dieser beabstandet ist. Das Ausmaß der Beabstandung der Längsebene 367 von der Zentralachse 361, hängt von dem Durchmesser der oberen und der unteren Ein- und Ausströmöffnungen 362A, 362B ab, da das Einströmen und das Ausströmen von Fluid durch die oberen und der unteren Ein- und Ausströmöffnungen 362A, 362B ohne Einschränkungen erfolgen soll. Die Längsebene 367 muss somit eine Beabstandung zur Zentralachse 361 aufweisen, welche in etwa der Hälfte des Durchmessers der jeweiligen Ein- und Ausströmöffnungen 362A, 362B entspricht. Die Längsebene 367 wird an einem stirnseitigen Ende der Drehschieberwandung 363, welches die erste Ebene 360A der doppelten Drehschieberanordnung 360 stirnseitig nach außen begrenzt, mit einer äußere Flachebene 368 fortgesetzt. Die äußere Flachebene 368 ist orthogonal zur Zentralachse 361 angeordnet und schließt radial direkt an die Drehschieberwandung 363 an. Zusätzlich weist das Stellelement 366 eine Schrägebene 369 auf, welche zumindest zwischen der oberen Ein- und Ausströmöffnung 362A und einer um 90° versetzten unteren Ein- und Ausströmöffnung 362B eine fluidische Verbindung ermöglicht. Die Schrägebene 369 schneidet die Zentralachse 361 und die Längsebene 367. Der erste Teilraum wird somit durch eine stirnseitige Ebene, welche die Drehschieberwandung 363 axial begrenzt und die äußere Flachebene 368 beinhaltet, die Schrägebene 369 und die Längsebene 367 definiert. Der erste Teilraum befindet sich sozusagen zumindest größtenteils oberhalb des Stellelements 366, wenn das Stellelement 366 in die doppelte Drehschieberanordnung 360 eingebracht ist. Der zweite Teilraum liegt entsprechend zumindest teilweise unterhalb der äußeren Flachebene 368 und der Schrägebene 369.

Das Stellelement 366 lässt sich in der Drehschieberwandung 363 so ausrichten, dass die obere Ein- und Ausströmöffnung 362A der ersten Ebene 360A mit einer unteren Ein- und Ausströmöffnung 362B fluidisch verbunden wird. Somit kann Fluid über die obere Ein- und Ausströmöffnung 362A in die doppelte Drehschieberanordnung 360 einströmen und aus der unteren Ein- und Ausströmöffnung 362B ausströmen oder umgekehrt. Mit anderen Worten kann das Fluid beim Durchströmen des ersten Teilraums die Ebenen 360A, 360B wechseln.

In dieser Anordnung des Stellelements 366 werden durch den zweiten Teilraum unterhalb des Stellelements 366 zwei untere Ein- und Ausströmöffnungen 362B in einem Winkel von 90° miteinander fluidisch verbunden. Das Fluid bleibt somit vom Einströmen in die doppelte Drehschieberanordnung 360, dem Umleiten um 90°, bis hin zum Ausströmen aus der doppelten Drehschieberanordnung 360 in der zweiten Ebene 360B.

Die Figur 6E zeigt die doppelten Drehschieberanordnung 360 gemäß der Figur 6D in einer anderen Anordnung. Die Drehschieberwandung 363 weist die obere ersten Ebene 360A mit oberen Ein- und Ausströmöffnung 362A und die untere zweite Ebene 360B mit insgesamt drei unteren Ein- und Ausströmöffnung 362B auf. Innerhalb der Drehschieberwandung 363 befindet sich das Stellelement 366. In der vorliegenden Anordnung befindet sich das Stellelement 366 im Vergleich zur Anordnung der Figur 6D in einer relativ zu der Drehschieberwandung 363 um 90° verdrehten Anordnung.

Das Stellelement 366 ist in der Drehschieberwandung 363 so ausgerichtet, dass die obere Ein- und Ausströmöffnung 362A der ersten Ebene 360A mit einer anderen unteren Ein- und Ausströmöffnung 362B, welche der oberen Ein- und Ausströmöffnung 362A gegenüberliegt, fluidisch verbunden ist. Somit kann Fluid über die obere Ein- und Ausströmöffnung 362A in die doppelte Drehschieberanordnung 360 einströmen und aus der anderen unteren Ein- und Ausströmöffnung 362B ausströmen oder umgekehrt.

In dieser Anordnung des Stellelements 366 werden durch den zweiten Teilraum unterhalb des Stellelements 366 zwei andere untere Ein- und Ausströmöffnungen 362B, welche einander gegenüberliegend angeordnet sind, miteinander fluidisch verbunden. Im Unterschied zur Anordnung gemäß der Figur 6D wird das Fluid in der gleichen Richtung aus der doppelten Drehschieberanordnung 360 ein- und ausgeströmt. Ebenfalls bleibt das Fluid vom Einströmen in die doppelten Drehschieberanordnung 360 bis hin zum Ausströmen aus der doppelten Drehschieberanordnung 360 in der zweiten Ebene 360B. Die Fig. 6F zeigt das Stellelement 366 mit der Zentralachse 361, der Schrägebene 369, der Längsebene 367 und der Flachebene 368 in einer perspektivischen Darstellung. Zusätzlich umfasst das Stellelement 366 eine kurze Einströmebene 369A, welche die Schrägebene 369 in einem oberen Abschnitt abflacht. Die Zentralachse 361 verfügt über einen oberen Abschnitt, welcher zur Anbindung an das nasslaufende Getriebe (nicht gezeigt), und einen unteren Abschnitt, welcher zur Lagerung des Stellelements 366, geeignet ist.

Die Fig. 6G zeigt das Stellelement 366 gemäß der Figur 6F in einer alternativen perspektivischen Darstellung.

Derartige Stellelemente 366 werden meist im Spritzgussverfahren hergestellt. Es ist weniger komplex aufgebaut als beispielsweise eine verzweigte Kanalanordnung. Das Spritzgusswerkzeug kann als einfaches "auf/zu" - Werkzeug ausgebildet werden, wodurch zusätzliche Seitenschieber entfallen. Dies reduziert die Planungs-, Wartungs- und Fertigungskosten des Stellelements 366.

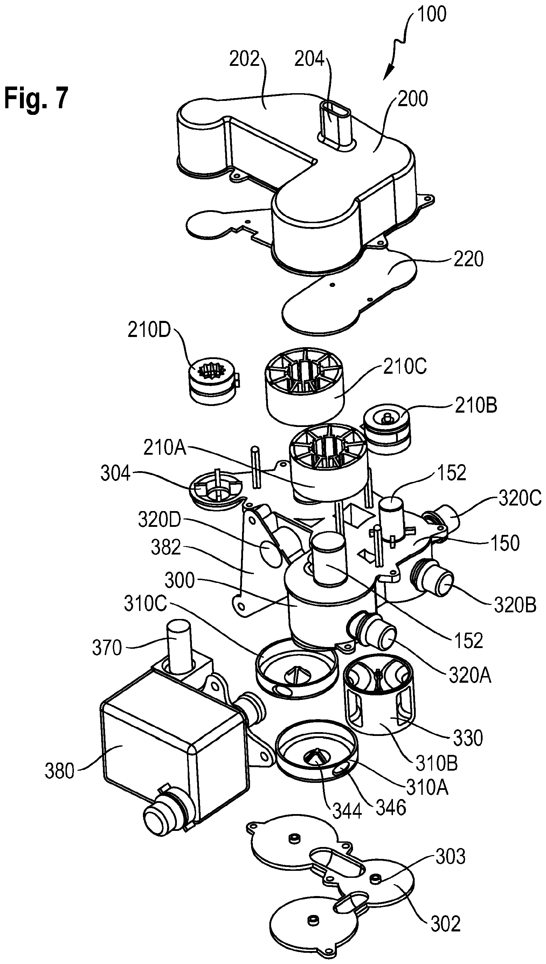

Die Fig. 7 zeigt eine Explosionsdarstellung einer erfindungsgemäßen Vorrichtung 100 zur Handhabung von Fluid nach einer weiteren Ausführungsform. Die Vorrichtung 100 umfasst den ersten Gehäuseabschnitt 200 und den zweiten Gehäuseabschnitt 300, wobei der erste Gehäuseabschnitt 200 und der zweite Gehäuseabschnitt 300 durch die fluidisch undurchlässige I<onturwand 150 aneinander angrenzend ausgebildet sind. Die I<onturwand 150 ist einstückig ausgebildet. In dieser Ausführungsform ist die I<onturwand 150 gleichzeitig die Außenwand des zweiten Gehäuseabschnitts 300, wodurch die Außenwand identisch ist mit der zum ersten Gehäuseabschnitt 200 orientierten Seite des zweiten Gehäuseabschnitts 300.

Die I<onturwand 150 weist auf der zum ersten Gehäuseabschnitt 200 orientierten Seite die zylinderförmigen Ausbuchtungen 152 auf. Auf diese zylinderförmige Ausbuchtungen 152 sind Mittel 210A, 210B, 210C zum Erzeugen eines steuerbar veränderlichen Magnetfelds in Form von Statoren aufgebracht. Die zylinderförmigen Ausbuchtungen 152 ragen jeweils in den Innenraum jedes angeordneten Stators hinein und füllen diesen Innenraum vollständig aus. Die Mittel 210A, 210B, 210C, 210D zum Erzeugen eines steuerbar veränderlichen Magnetfelds sind in der vorliegenden Ausführungsform als Statoren von Schrittmotoren ausgebildet.

Auf der zum zweiten Gehäuseabschnitt 300 orientierten Seite (nicht gezeigt) der I<onturwand 150 befinden sich Mittel 310A, 310B, 310C, welche durch das erzeugte Magnetfeld der jeweils zugeordneten Mittel 210A, 210B, 210C zum Erzeugen eines steuerbar veränderlichen Magnetfelds, bewegbar ausgebildet sind. Die Mittel 310A, 310B, 310C, welche durch das erzeugte Magnetfeld bewegbar ausgebildet sind, weisen jeweils einen Rotor mit einem zugeordneten Magnet auf (nicht gezeigt). Der Rotor wird durch den Stator in Rotation versetzt, wodurch die Mittel 310A, 310B, 310C welche durch das Magnetfeld bewegbar ausgebildet sind durch den Stator steuerbar sind. Die Mittel 310A, 310B, 310C, welche durch das erzeugte Magnetfeld bewegbar sind, sind jeweils Mittel zum Fördern und/ oder zum Steuern von Fluid zugeordnet. So ist dem Stator des Mittels 210B zum Erzeugen eines steuerbar veränderlichen Magnetfeldes das Schaltelement 330 zugeordnet, welches als Drehschieber ausgebildet ist. Durch den Drehschieber können unterschiedliche Bauräume und unterschiedliche Anforderungen mit jeweils verschiedene Schaltungsstrategien realisiert werden. So kann Fluid umgeleitet und unterschiedliche Anschlüsse und Schaltmodi können miteinander kombiniert werden.

Dem Stator der Mittel 210A, 210C zum Erzeugen eines steuerbar veränderlichen Magnetfeldes ist jeweils ein Laufrad 340 (nicht gezeigt) zugeordnet. Das Laufrad 340 ist als Impeller ausgebildet und wird direkt in einen Fluidkreislauf innerhalb des zweiten Gehäuseabschnitts 300 integriert. Durch den Stator wird über die magnetische Kopplung zum Rotor ein Drehmoment erzeugt, welches zu einer Rotation des Impellers führt. Somit wird der Impeller als Pumpe des jeweils zugeordneten Fluidkreislaufs nutzbar.

Die Rotoren, welche den Mittel 310A, 310B, 310C welche durch das Magnetfeld bewegbar ausgebildet sind, zugeordnet sind, sind jeweils in die zylinderförmige Ausbuchtung 152 zum Aufnehmen eines im zweiten Gehäuseabschnitt 300 angeordneten Rotors eingebracht. Mit anderen Worten wird durch die zylindrische Ausbuchtung 152 sowohl die genaue Anordnung eines Stators im ersten Gehäuseabschnitt 200 als auch die genaue Anordnung eines Rotors im zweiten Gehäuseabschnitt 300 ermöglicht, wodurch eine exakte Zuordnung von Rotor und Stator untereinander realisiert wird. Die zylindrische Ausbuchtung 152 erfüllt also die Doppelfunktion der Zuordnung von Rotor und Stator einerseits und die fluiddichte Trennung zwischen erstem Gehäuseabschnitt 200 und zweitem Gehäuseabschnitt 300, welcher als hydraulische Entkopplung bezeichnet werden kann.

Die Kombination aus Mittel 210A, 210B, 210C zum Erzeugen eines steuerbar veränderlichen Magnetfelds in Form eines Stators, welches im trockenen ersten Gehäuseabschnitt 200 angeordnet ist, das jeweils zugeordnete Mittel 310A, 310B, 310C, welches durch das erzeugte Magnetfeld bewegbar und im nassen zweiten Gehäuseabschnitt 300 angeordnet ist, und über die I<onturwand 152 hinweg durch eine magnetische Kopplung betreibbar ist, beschreiben jeweils ein Fluidhandhabungselement 110A, 110B, 110C.

Das Mittel 210D zum Erzeugen eines steuerbar veränderlichen Magnetfelds in Form eines Schrittmotors ist dem trockenen ersten Gehäuseabschnitt 200 zugeordnet. Zusätzlich ist ein Mittel, welches durch das erzeugte Magnetfeld bewegbar ist, zugeordnet, welches in Form eines Expansionsventils 370 ausgebildet ist. Im Unterschied zu den bereits beschriebenen Fluidhandhabungselementen 110A, 110B, 110C existiert keine durchgehende fluidundurchlässige I<onturwand zwischen dem Mittel 210D zum Erzeugen eines steuerbar veränderlichen Magnetfelds und dem Mittel, welches durch das erzeugte Magnetfeld bewegbar ist. Letzteres ist in das Gehäuse des Expansionsventils 370 integriert und das Expansionsventil 370 ist lediglich parallel zu den anderen Fluidhandhabungselementen 110A, 110B, 110C am Gehäuse der Vorrichtung angeordnet, wobei der Schrittmotor in den trockenen Bereich des ersten Gehäuseabschnitts 200 integriert ist. Zur Stabilisierung des Expansionsventils 370 in der Vorrichtung 100 sind insgesamt vier seitliche Haltemittel 304 angeordnet.

Insgesamt verfügt die Vorrichtung 100 in der vorliegenden Ausführungsform über ein erstes Fluidhandhabungselement 110A, welches als Fluidpumpe ausgebildet ist. Zusätzlich umfasst die Vorrichtung 100 ein zweites Fluidhandhabungselement 110C, welches ebenfalls eine Fluidpumpe aufweist. Dadurch können zwei voneinander getrennte Fluidkreisläufe betrieben werden, bzw. lässt sich damit das Fluid zweier getrennter Fluidkreisläufe befördern. Zusätzlich weist die Vorrichtung 100 ein drittes Fluidhandhabungselement 1 10B auf, welches ein Fluidventil oder ein Schaltelement 330 umfasst. Das Fluidventil ist mit einem Drehschieber ausgebildet und der Drehschieber macht die Vorrichtung 100 an verschiedene Fahrzeuge anpassbar. Unterschiedliche Bauräume und unterschiedliche Anforderungen des Fahrzeugs können beispielsweise durch Umleiten des Fluids realisiert werden. Durch Umschalten des Drehschiebers kann von parallelen Fluidkreisläufen auf serielle Fluidkreisläufe umgeschaltet werden. Das Expansionsventil 370, ist zum Betreiben eines Wärmetauschers 380 ausgebildet. Der Wärmetauscher 380 ist seitlich mittels eines Flanschs 382 an den zweiten Gehäuseabschnitt 300 fixiert.

Alle der Fluidhandhabungselemente 110A, 110B, 110C sind derart an der Vorrichtung 100 angeordnet, dass die Rotorachsen (nicht gezeigt) der Fluidhandhabungselemente 110A, 110B, 110C parallel zueinander angeordnet sind. Dies vereinfacht die Fertigung und die Montage der gesamten Vorrichtung 100 erheblich, wobei zusätzlich einzelne Baugruppen einfach getestet und ausgetauscht werden können.

An den zweiten Gehäuseabschnitt 300 sind mehrere Anschlüsse 320A, 320B, 320C, 320D zum Ein- und Ausströmen von Fluid angeordnet. Die Anschlüsse dienen als Kundenschnittstelle und können je nach Anforderung in Bezug auf den Schlauchdurchmesser und die entsprechenden Positionen variiert werden. Die vorliegende Ausführungsform umfasst insgesamt vier Anschlüsse 320A, 320B, 320C, 320D, welche Fluid seitlich aus dem zweiten Gehäuseabschnitt 300 ausleiten bzw. Fluid seitlich in den zweiten Gehäuseabschnitt 300 einleiten. Ein Anschluss 320D dient der Verbindung mit einem Wärmetauscher 380.

Die Vorrichtung 100 umfasst die elektrische Steuereinheit 220, welche ebenfalls im trockenen ersten Gehäuseabschnitt 200 angeordnet ist. Die elektrische Steuereinheit 220 ist als flächiger Körper ausgebildet wie es beispielsweise bei Steuerplatinen oder dergleichen üblich ist. Die Steuereinheit 220 ist oberhalb der als Statoren ausgebildeten Mittel zum Erzeugen eines steuerbar veränderlichen Magnetfelds 210A, 210B, 210C, 210D angeordnet. Die elektrische Steuereinheit 220 ist zur Steuerung der Vorrichtung 100 notwendig.

Beispielsweise könnte die Steuereinheit 220 auch zwischen den einzelnen Statoren innerhalb des ersten Gehäuseabschnitts 200, jedoch unmittelbar angrenzend an der fluidisch undurchlässigen I<onturwand 150 angeordnet werden. Dies wäre vorteilhaft da die elektrische Steuereinheit 220 zusätzlich gekühlt werden könnte, ohne ein Risiko des unmittelbaren Kontakts mit dem Fluid einzugehen. Zusätzlich könnte mit der Verlustwärme geheizt werden, welche im Betrieb der elektrischen Steuereinheit 220 entsteht. Alternativ könnte die elektrische Steuereinheit 220 auch außerhalb der Vorrichtung 100 angeordnet werden. Dies bietet sich beispielsweise für externe kundenspezifische Steuereinheiten an, welche über eine Schnittstelle - beispielsweise über den Steckeranschluss 204 - mit der Vorrichtung 100 verbunden werden.

Der erste Gehäuseabschnitt 200 umfasst ein abnehmbares erstes Abdeckelement 202. Dieses erste Abdeckelement 202 vereinfacht den Zugang zu gesamten Elektronik, welche innerhalb des ersten Gehäuseabschnitts 200 angeordnet ist. Somit kann zu Reparaturzwecken, Inspektionen oder auch zu Testzwecken direkt auf den Trockenbereich und die Bestandteile der Elektronik in der Vorrichtung 100 zugegriffen werden. Beispielsweise kann das Abdeckelement 202 mittels einer Schraubverbindung mit dem zweiten Gehäuseabschnitt 300 verbunden werden. Alternativ ist jedoch ebenso eine Klemm- oder Rastverbindung denkbar. Zusätzlich umfasst das erste Abdeckelement 202 einen Steckeranschluss 204, welcher als zusätzliche Schnittstelle zum Kunden eingesetzt werden kann.

Beispielsweise kann die Vorrichtung 100 mittels einer I<undeneigenen Steuereinheit verbunden und betrieben werden.

Entsprechend verfügt der zweite Gehäuseabschnitt 300 auch über ein abnehmbares zweites Abdeckelement 302. Auch dieses zweite Abdeckelement 302 kann zu Reparaturzwecken entfernt werden, wodurch direkt auf alle nasslaufenden Bestandteile der Vorrichtung 100 zugegriffen werden kann. Beispielsweise können auch defekte Bestandteile gewechselt werden, ohne dass direkt die gesamte Vorrichtung 100 aus dem betreffenden Fahrzeug ausgebaut werden muss. Das zweite Abdeckelement 302 verfügt über insgesamt drei Lager 303, welche zur Aufnahme des jeweiligen Mittels 310A, 310B, 310C welches durch das erzeugte Magnetfeld bewegbar ist, ausgebildet sind. Beispielsweise kann der untere Abschnitt der Zentralachse 361 (nicht gezeigt) des Stellelements 366 (nicht gezeigt) von dem zugeordneten Lager 303 im zweiten Abdeckelement 302 aufgenommen werden. Sämtliche in Verbindung mit einzelnen Ausführungsformen der Erfindung erläuterten und gezeigten Merkmale können in unterschiedlichen Kombinationen in dem erfindungsgemäßen Gegenstand vorgesehen sein, um gleichzeitig deren vorteilhafte Wirkung zu realisieren. Der Schutzbereich der vorliegenden Erfindung ist durch die Ansprüche gegeben und wird durch die in der Beschreibung erläuterten oder in den Figuren gezeigten Merkmale nicht beschränkt.

## Patentansprüche

1. Vorrichtung (100) zur Handhabung von Fluid eines zumindest teilweise elektrisch angetriebenen Fahrzeugs, mit:
einer Pumpeneinrichtung (400) umfassend
ein erstes Laufrad (340A) und ein zweites Laufrad (340B), die koaxial zueinander angeordnet und durch Rotation als Pumpe zum Fördern von Fluid ausgebildet sind,
wobei das erste Laufrad (340A) über eine Rotorwelle (316) mit einem ersten Rotor (314A) verbunden ist, um eine direkte Drehmomentenübertragung zwischen dem ersten Laufrad (340 A) und dem ersten Rotor (314A) zu realisieren, das zweite Laufrad (340B) über eine Rotorhohlwelle (317) mit einem zweiten Rotor (314B) verbunden ist, um eine direkte Drehmomentenübertragung zwischen dem zweiten Laufrad (340 B) und dem zweiten Rotor (314B) zu realisieren, und sich die Rotorwelle (316) durch die Rotorhohlwelle (317) hindurch erstreckt,
wobei das erste Laufrad (340A) und das zweite Laufrad (340B) jeweils innerhalb eines Laufradgehäuses (342A, 342B) angeordnet sind, wobei das erste Laufradgehäuse (342A) und das zweite Laufradgehäuse (342B) mittels eines Trennelements (348) voneinander getrennt ausgebildet sind,
wobei die Vorrichtung (100) ferner umfasst:
ein Vorrichtungsgehäuse umfassend einen ersten Gehäuseabschnitt (200) und einen zweiten Gehäuseabschnitt (300), wobei der erste Gehäuseabschnitt (200) und der zweite Gehäuseabschnitt (300) durch eine fluidisch undurchlässige I<onturwand (150) aneinander angrenzend ausgebildet sind,
wobei die I<onturwand (150) eine zum ersten Gehäuseabschnitt (200) orientierte Seite und eine zum zweiten Gehäuseabschnitt (300) orientierte Seite aufweist,
und zumindest ein Fluidhandhabungselement (1 10A, 1 10B, 110C),
wobei das Fluidhandhabungselement (110A, 110B, 110C) ein Mittel (210A, 210B, 210C) zum Erzeugen eines steuerbar veränderlichen Magnetfelds, welches in dem ersten Gehäuseabschnitt (200) angeordnet ist, und ein Mittel (310A, 310C) in Form der Pumpeneinrichtung (400), welches durch das erzeugte Magnetfeld bewegbar ist und in dem zweiten Gehäuseabschnitt (300) angeordnet ist, umfasst,
und wobei das Mittel (210A, 210B, 210C) zum Erzeugen eines steuerbar veränderlichen Magnetfelds, welches in dem ersten Gehäuseabschnitt (200) angeordnet ist, einen ersten Stator (210-1) und einen zweiten Stator (210-2) aufweist.

2. Vorrichtung (100) nach Anspruch 1, wobei das Trennelement (348) ein Lager (408) aufweist.

3. Vorrichtung (100) nach einem der vorangehenden Ansprüche, wobei das erste Laufrad (340A) und das zweite Laufrad (340B) voneinander unabhängig betreibbar ausgebildet sind.

4. Vorrichtung (100) nach einem der vorangehenden Ansprüche, wobei das erste Laufrad (340A) und das zweite Laufrad (340B) zueinander gegenläufig angeordnet sind.

5. Vorrichtung (100) nach einem der vorangehenden Ansprüche, wobei das erste Laufrad (340A) von dem zweiten Laufrad (340B) verschieden ausgebildet ist.

6. Vorrichtung (100) nach Anspruch 1, wobei das Mittel (310A, 310B, 310C), welches durch das erzeugte Magnetfeld bewegbar ist und in dem zweiten Gehäuseabschnitt (300) angeordnet ist, den ersten Rotor (314A), welcher dem ersten Stator (210-1) zugeordnet ist, und den zweiten Rotor (314B), welcher dem zweiten Stator (210-2) zugeordnet ist, umfasst.

7. Vorrichtung (100) nach einem der vorangehenden Ansprüche, wobei die Konturwand (150) eine zylinderförmige Ausbuchtung (152) aufweist, welche einen Innenraum des im ersten Gehäuseabschnitt (200) angeordneten ersten Stators (210-1) und zweiten Stators (210-2) zumindest im Wesentlichen füllt.

8. Vorrichtung (100) nach einem der vorangehenden Ansprüche, wobei das erste Laufrad (340A) und das zweite Laufrad (340B) jeweils radial außerhalb des ersten Rotors (314A) und des zweiten Rotors (314B) angeordnet sind.

9. Vorrichtung (100) nach einem der vorangehenden Ansprüche, wobei der zweite Gehäuseabschnitt (300) fluidführend ausgebildet ist und zumindest einen Anschluss (320A, 320B, 320C, 320D) zum Ein- und/ oder Ausströmen von Fluid umfasst.

10. Vorrichtung (100) nach einem der vorangehenden Ansprüche, wobei dem ersten Gehäuseabschnitt (200) eine elektrische Steuereinheit (220) zum Steuern der Vorrichtung (100) zugeordnet ist.

11. Vorrichtung (100) nach einem der vorangehenden Ansprüche, wobei die Vorrichtung (100) ein zweites Fluidhandhabungselement (110A, 110B, 110C) umfasst, wobei die fluidisch undurchlässige I<onturwand (150) kontinuierlich zwischen dem ersten Fluidhandhabungselement (110A, 110B, 110C, 110D) und dem zweiten Fluidhandhabungselement (1 10A, 1 10B, 1 10C) ausgebildet ist.

12. Vorrichtung (100) nach einem der Ansprüche 10 oder 11, wobei die elektrische Steuereinheit (220) innerhalb des ersten Gehäuseabschnitts (200) angrenzend an der fluidisch undurchlässigen I<onturwand (150) zwischen dem ersten Fluidhandhabungselement (110A, 110B, 110C, 110D) und dem zweiten Fluidhandhabungselement (1 10A, 1 10B, 1 10C) angeordnet ist.

13. Vorrichtung (100) nach einem der Ansprüche 11 oder 12, wobei die Vorrichtung (100) einen ersten Fluidkreislauf, welcher dem ersten Fluidhandhabungselement (110A) zugeordnet ist, und einen zweiten Fluidkreislauf, welcher dem zweiten Fluidhandhabungselement (110C) zugeordnet ist, aufweist.

14. Vorrichtung (100) nach einem der vorangehenden Ansprüche, wobei die Rotorachsen (312A, 312B, 312C) der Fluidhandhabungselemente (110A, 110B, 110C) parallel zueinander angeordnet sind.

## Claims

1. Apparatus (100) for handling fluid of an at least partially electrically driven vehicle, comprising:
a pump device (400) comprising
a first running wheel (340A) and a second running wheel (340B), which are arranged coaxially to each other and are formed as a pump for pumping fluid by rotation,
wherein the first running wheel (340A) is connected to a first rotor (314A) via a rotor shaft (316) in order to realize a direct torque transmission between the first running wheel (340A) and the first rotor (314A), the second running wheel (340B) is connected to a second rotor (314B) via a rotor hollow shaft (317) in order to realize a direct torque transmission between the second running wheel (340B) and the second rotor (314B), and the rotor shaft (316) extends through the rotor hollow shaft (317),
wherein the first running wheel (340A) and the second running wheel (340B) are each arranged within a running wheel housing (342A, 342B), wherein the first running wheel housing (342A) and the second running wheel housing (342B) are separated from each other by means of a separating element (348),
wherein the apparatus (100) further comprises
an apparatus housing comprising a first housing section (200) and a second housing section (300), wherein the first housing section (200) and the second housing section (300) are formed adjacent to each other by a fluidically impermeable contour wall (150),
wherein the contour wall (150) comrpises a side oriented towards the first housing section (200) and a side oriented towards the second housing section (300),
and at least one fluid handling element (1 10A, 1 10B, 1 10C),
wherein the fluid handling element (110A, 110B, 110C) comprises a means (210A, 210B, 210C) for generating a controllably variable magnetic field, which is arranged in the first housing section (200), and a means (310A, 310C) in the form of the pump device (400), which is movable by the generated magnetic field and is arranged in the second housing section (300),
and wherein the means (210A, 210B, 210C) for generating a controllably variable magnetic field, which is arranged in the first housing section (200), has a first stator (210-1) and a second stator (210-2).

2. Apparatus (100) according to claim 1, wherein the separating element (348) comprises a bearing (408).

3. Apparatus (100) according to one of the preceding claims, wherein the first running wheel (340A) and the second running wheel (340B) are designed to be operable independently of each other.

4. Apparatus (100) according to one of the preceding claims, wherein the first running wheel (340A) and the second running wheel (340B) are arranged in opposite directions to each other.

5. Apparatus (100) according to one of the preceding claims, wherein the first running wheel (340A) is formed differently from the second running wheel (340B).

6. Apparatus (100) according to claim 1, wherein the means (310A, 310B, 310C) which is movable by the generated magnetic field and is arranged in the second housing section (300) comprises the first rotor (314A) which is associated with the first stator (210-1) and the second rotor (314B) which is associated with the second stator (210-2).

7. Apparatus (100) according to one of the preceding claims, wherein the contour wall (150) comprises a cylindrical protrusion (152) which at least substantially fills an inner space of the first stator (210-1) and second stator (210-2) arranged in the first housing section (200).

8. Apparatus (100) according to one of the preceding claims, wherein the first running wheel (340A) and the second running wheel (340B) are each arranged radially outside the first rotor (314A) and the second rotor (314B).

9. Apparatus (100) according to one of the preceding claims, wherein the second housing section (300) is designed to carry fluid and comprises at least one port (320A, 320B, 320C, 320D) for the inflow and/or outflow of fluid.

10. Apparatus (100) according to one of the preceding claims, wherein an electrical control unit (220) for controlling the apparatus (100) is associated with the first housing section (200).

11. Apparatus (100) according to any one of the preceding claims, wherein the apparatus (100) comprises a second fluid handling element (110A, 110B, 110C), wherein the fluidically impermeable contour wall (150) is formed continuously between the first fluid handling element (110A, 110B, 110C, 110D) and the second fluid handling element (110A, 110B, 110C).

12. Apparatus (100) according to one of claims 10 or 11, wherein the electrical control unit (220) is arranged within the first housing section (200) adjacent to the fluidically impermeable contour wall (150) between the first fluid handling element (110A, 110B, 110C, 110D) and the second fluid handling element (1 10A, 1 10B, 110C).

13. Apparatus (100) according to one of claims 11 or 12, wherein the apparatus (100) comprises a first fluid circuit associated with the first fluid handling element (1 10A) and a second fluid circuit associated with the second fluid handling element (1 10C).

14. Apparatus (100) according to one of the preceding claims, wherein the rotor axes (312A, 312B, 312C) of the fluid handling elements (110A, 110B, 110C) are arranged parallel to each other.

## Revendications

1. Appareil (100) pour la manipulation de fluides d'un véhicule au moins partiellement électrique, comprenant :
un dispositif de pompage (400) comprenant
une première roue porteuse (340A) et une deuxième roue porteuse (340B), qui sont disposées de manière coaxiale l'une par rapport à l'autre et forment une pompe pour pomper le fluide par rotation,
dans lequel la première roue porteuse (340A) est reliée à un premier rotor (314A) par l'intermédiaire d'un arbre de rotor (316) afin de réaliser une transmission de couple directe entre la première roue porteuse (340A) et le premier rotor (314A), la deuxième roue porteuse (340B) est reliée à un deuxième rotor (314B) par l'intermédiaire d'un arbre creux de rotor (317) afin de réaliser une transmission de couple directe entre la deuxième roue porteuse (340B) et le deuxième rotor (314B), et l'arbre de rotor (316) s'étend au travers de l'arbre creux de rotor (317),
dans lequel la première roue porteuse (340A) et la deuxième roue porteuse (340B) sont chacune disposées à l'intérieur d'un carter de roue porteuse (342A, 342B), dans lequel le premier carter de roue porteuse (342A) et le deuxième carter de roue porteuse (342B) sont séparés l'un de l'autre au moyen d'un élément de séparation (348),
dans lequel l'appareil (100) comprend en outre
un boîtier d'appareil comprenant une première section de boîtier (200) et une deuxième section de boîtier (300), dans lequel la première section de boîtier (200) et la deuxième section de boîtier (300) sont configurées de manière adjacente par une paroi de contour imperméable aux fluides (150),
dans laquelle la paroi de contour (150) comprend un côté orienté vers la première section de boîtier (200) et un côté orienté vers la deuxième section de boîtier (300),
et au moins un élément de manipulation des fluides (1 10A, 1 10B, 110C),
dans lequel l'élément de manipulation des fluides (1 10A, 1 10B, 1 10C) comprend un moyen (210A, 210B, 210C) pour générer un champ magnétique variable contrôlable, qui est disposé dans la première section de boîtier (200), et un moyen (310A, 310C) sous la forme d'un dispositif de pompe (400), qui est déplaçable par le champ magnétique généré et est disposé dans la deuxième section de boîtier (300),
et dans lequel le moyen (210A, 210B, 210C) pour générer un champ magnétique variable contrôlable, qui est disposé dans la première section du boîtier (200), comprend un premier stator (210-1) et un second stator (210-2).

2. Appareil (100) selon la revendication 1, dans lequel l'élément de séparation (348) comprend un palier (408).

3. Appareil (100) selon l'une des revendications précédentes, dans lequel la première roue porteuse (340A) et la deuxième roue porteuse (340B) sont conçues pour pouvoir être actionnées indépendamment l'une de l'autre.

4. Appareil (100) selon l'une des revendications précédentes, dans lequel la première roue de roulement (340A) et la seconde roue de roulement (340B) sont agencées dans des directions opposées l'une à l'autre.

5. Appareil (100) selon l'une des revendications précédentes, dans lequel la première roue porteuse (340A) est formée différemment par rapport à la deuxième roue porteuse (340B).

6. Appareil (100) selon la revendication 1, dans lequel le moyen (310A, 310B, 310C) qui est déplaçable par le champ magnétique généré et disposé dans la deuxième section de boîtier (300) comprend le premier rotor (314A) qui est associé au premier stator (210-1) et le deuxième rotor (314B) qui est associé au deuxième stator (210-2).

7. Appareil (100) selon l'une des revendications précédentes, dans lequel la paroi de contour (150) comprend une protubérance cylindrique (152) qui remplit au moins sensiblement un espace intérieur du premier stator (210-1) et du deuxième stator (210-2) disposés dans la première section de boîtier (200).

8. Appareil (100) selon l'une des revendications précédentes, dans lequel la première roue porteuse (340A) et la deuxième roue porteuse (340B) sont chacune disposées radialement à l'extérieur du premier rotor (314A) et du deuxième rotor (314B).

9. Appareil (100) selon l'une des revendications précédentes, dans lequel la deuxième section de boîtier (300) est conçue pour transporter du fluide et comprend au moins un port (320A, 320B, 320C, 320D) pour l'entrée et/ou la sortie de fluide.

10. Appareil (100) selon l'une des revendications précédentes, dans lequel une unité de commande électrique (220) pour la commande de l'appareil (100) est associée à la première section de boîtier (200).

11. Appareil (100) selon l'une des revendications précédentes, dans lequel l'appareil (100) comprend un deuxième élément de manipulation de fluide (1 10A, 1 10B, 1 10C), dans lequel la paroi de contour imperméable aux fluides (150) est formée de manière continue entre le premier élément de manipulation de fluide (110A, 110B, 110C, 110D) et le deuxième élément de manipulation de fluide (110A, 110B, 110C).

12. Appareil (100) selon l'une des revendications 10 ou 11, dans lequel l'unité de commande électrique (220) est disposée à l'intérieur de la première section du boîtier (200) de manière adjacente à la paroi de contour imperméable aux fluides (150) entre le premier élément de manipulation des fluides (1 10A, 1 10B, 1 10C, 1 10D) et le deuxième élément de manipulation des fluides (110A, 110B, 110C).

13. Appareil (100) selon l'une des revendications 11 ou 12, dans lequel l'appareil (100) comprend un premier circuit de fluide associé au premier élément de manipulation de fluide (1 10A) et un second circuit de fluide associé au second élément de manipulation de fluide (110C).

14. Appareil (100) selon l'une des revendications précédentes, dans lequel les axes des rotors (312A, 312B, 312C) des éléments de manipulation des fluides (1 10A, 110B, 110C) sont disposés parallèlement les uns aux autres.
